# EUROPÄISCHE PATENTSCHRIFT

(11) **EP 3 732 951 B1**
(45) Veröffentlichungstag und Bekanntmachung des Hinweises auf die Patenterteilung: **31.08.2022**
(21) Anmeldenummer: 19172022.6
(22) Anmeldetag: 30.04.2019
(51) Int. Cl.: A01D 65/02

(54) **ÄHRENHEBER FÜR ERNTEGUT**
CROP LIFTER FOR HARVESTED CROPS
RELEVEUR D'ÉPIS POUR LA RÉCOLTE

(43) Veröffentlichungstag der Anmeldung: 04.11.2020
(73) Patentinhaber: SMF - Holding GmbH, 57612 Eichelhardt (DE)
(72) Erfinder: HÖLLER, Frank, 57629 Stein Wingert (DE)
(74) Vertreter: Neumann Müller Oberwalleney Patentanwälte PartG mbB

(56) Entgegenhaltungen:
- EP-A1- 1 256 271
- DE-A1- 3 300 769
- DE-U1-212014 000 204

## Beschreibung

Die Erfindung betrifft einen Ährenheber für Erntegut mit einer Tragschiene, wobei die Tragschiene sich in eine Haupterstreckungsrichtung erstreckt und in der Haupterstreckungsrichtung hintereinander angeordnet einen Befestigungsabschnitt, einen Mittenabschnitt und einen Gleitkufenabschnitt aufweist.

Bekannte Mähsysteme für Erntemaschinen weisen einen sogenannten Mähbalken auf, entlang dessen Mähfinger angeordnet sind. Die Mähfinger führen einen Messerbalken und bilden Gegenschneiden für Schneidklingen, welche an einem Hin und Her bewegbaren Messerbalken angebracht sind. Um abgeknicktes oder lagerndes Halmgut sicher mähen zu können, werden Ährenheber eingesetzt, die das Halmgut anheben. Solche Ährenheber bestehen aus einer Tragschiene, die mit ihrem Befestigungsabschnitt an dem Mähbalken festlegbar ist und gegebenenfalls über einen Halter an einer Spitze eines Mähfingers abgestützt ist. Entsprechend der Fahrtrichtung der Erntemaschine bildet der Befestigungsabschnitt das hintere Ende der Tragschiene, an deren entgegengesetztem vorderen Ende in der Regel ein Halmhebeprofil angebracht ist. Dieses vordere Ende des Halmhebers wird möglichst dicht am Boden geführt. Um Bodenunhebenheiten folgen zu können, besteht die Tragschiene bekannter Ährenheber in der Regel aus einem Federstahl. Ein solcher Ährenheber ist beispielsweise aus der EP 1 256 271 A1 bekannt.

Aus der DE 21 2014 000 204 U1 ist ein Ährenheber für eine ein Mähwerk aufweisende, fahrbare Erntemaschine bekannt, bei dem ein Träger mittels eines Verbindungselements an einem starren Teil der Erntemaschine befestigt ist, wobei die Befestigung derart ausgebildet ist, dass der vordere Teil des Trägers gut nach oben gebogen werden kann, gegen Biegung nach unten jedoch fest und steif gehalten wird. Der Träger ist dazu durch eine Dreipunkteinspannung zu Biegung in jene Krümmungsrichtung elastisch vorgespannt in welche er im Betrieb noch biegbar sein soll und gegen Krümmung in die entgegengesetzte - unerwünschte - Richtung durch einen im Befestigungselement angeordneten Spannstift gesperrt.

Bei besonders starken Bodenunebenheiten oder durch Steine im Boden kann das vordere Ende des Ährenhebers in den Boden eindringen. Ein Nachteil der bekannten Ährenheber mit einer Tragschiene aus Federstahl besteht darin, dass die Tragschiene durch den Widerstand des in den Boden eingetauchten vorderen Endes nach unten, also in den Boden hinein, ausgelenkt werden kann, wodurch sich der Widerstand weiter erhöht. In einem solchen Fall wird der Ährenheber in der Regel so beschädigt, dass dieser ausgetauscht werden muss.

Eine Aufgabe der vorliegenden Erfindung besteht darin, einen Ährenheber vorzuschlagen, dessen Tragschiene Bodenunebenheiten folgen kann und der bei kurzzeitigem Eintauchen der Tragschiene in den Boden weniger leicht beschädigt wird.

Die Aufgabe wird durch den Gegenstand des Anspruchs 1 gelöst. In den Unteransprüchen sind bevorzugte Ausführungsformen und vorteilhafte Weiterbildungen angegeben.

Der erfindungsgemäße Ährenheber für Erntegut weist eine Tragschiene auf, wobei die Tragschiene sich in eine Haupterstreckungsrichtung erstreckt. In der Haupterstreckungsrichtung hintereinander angeordnet weist die Tragschiene einen Befestigungsabschnitt, einen Mittenabschnitt und einen Gleitkufenabschnitt auf. Die Tragschiene ist ein in der Haupterstreckungsrichtung langgestrecktes Bauteil, welches vorzugsweise aus einem Flachmaterial hergestellt ist. Die Tragschiene weist in der Haupterstreckungsrichtung einen geschwungenen, kurvigen, nicht geradlinigen Verlauf auf. Die Haupterstreckungsrichtung entspricht der Fahrtrichtung einer Erntemaschine, wenn der Ährenheber an der Erntemaschine montiert ist. Dabei befindet sich der Befestigungsabschnitt in Fahrtrichtung hinten, während der Gleitkufenabschnitt in Fahrtrichtung vorn angeordnet ist. Die Tragschiene kann zusätzliche Abschnitte vor, hinter oder zwischen den genannten Abschnitten aufweisen. Beispielsweise befindet sich das vordere Ende der Tragschiene in Fahrtrichtung in der Regel vor dem Gleitkufenabschnitt.

Der Mittenabschnitt bezeichnet im Sinne der Erfindung einen Abschnitt der Tragschiene zwischen dem Gleitkufenabschnitt und dem Befestigungsabschnitt, wobei die genaue Lage des Mittenabschnitts nicht auf die tatsächliche Mitte der Tragschiene festgelegt ist.

Erfindungsgemäß weist die Tragschiene eine Sperrvorrichtung auf, wobei die Sperrvorrichtung bezüglich einer Biegebeanspruchung des Mittenabschnitts versteifend wirkt. Eine den Mittenabschnitt versteifende Wirkung der Sperrvorrichtung ist bezüglich einer Biegebeanspruchung des Mittenabschnitts in einer ersten Biegerichtung größer als in einer zweiten, der ersten Biegerichtung entgegengesetzten Biegerichtung.

Ein Vorteil des erfindungsgemäßen Ährenhebers besteht darin, dass die Tragschiene bei einer Biegebeanspruchung in der zweiten Biegerichtung elastisch verformbar ausgeführt sein kann, um so Bodenunebenheiten auszugleichen. Der Mittenabschnitt der Tragschiene ist grundsätzlich derjenige Abschnitt, der zu diesem Zweck elastisch verformbar ist. Unter elastisch verformbar ist im Sinne der Erfindung zu verstehen, dass der Mittenabschnitt mindestens derart biegbar ist, dass der Gleitkufenabschnitt um einen Zentimeter ausgelenkt wird, ohne dass eine plastische Verformung des Mittenabschnitts eintritt. Da die Tragschiene in montiertem Zustand mit dem Befestigungsabschnitt an der Erntemaschine festgelegt ist, während das vordere Ende frei ist, weist die Tragschiene das Biegeverhalten eines einseitig eingespannten Biegebalkens auf. In montiertem Zustand der Tragschiene entspricht eine Biegung in der zweiten Biegerichtung einer Biegung der Tragschiene nach oben. Die entgegengesetzte, erste Biegerichtung entspricht dementsprechend einer Durchbiegung nach unten, bei der das vordere Ende der Tragschiene in den Boden eindringen kann. Das Sperrelement verhindert vorteilhaft eine Biegung des Mittenabschnitts in der ersten Biegerichtung, so dass insgesamt die Tragschiene nur geringfügig nach unten, also in der ersten Biegerichtung, ausgelenkt werden kann. Dadurch wird ein Eindringen des vorderen Endes der Tragschiene in den Boden vorteilhaft vermieden. Dadurch, dass die Sperrvorrichtung gegenüber einer Biegebeanspruchung in der zweiten Biegerichtung, also nach oben, einen geringeren Einfluss auf das Biegeverhalten des Mittenabschnitts hat, ist die Tragschiene unter Biegebeanspruchung in der zweiten Biegerichtung nach oben leichter auszulenken als unter Biegebeanspruchung in der ersten Biegerichtung nach unten. Dadurch kann der Gleitkufenabschnitt vorteilhaft Bodenunebenheiten folgen.

Bevorzugt ist die Sperrvorrichtung bezüglich einer Biegebeanspruchung des Mittenabschnitts in der zweiten Biegerichtung wirkungslos. Wirkungslos im Sinne der Erfindung bedeutet, dass die Sperrvorrichtung bei einer Biegebeanspruchung des Mittenabschnitts in der zweiten Biegerichtung keinen wesentlichen Einfluss auf das Biegeverhalten des Mittenabschnitts hat.

Die Tragschiene ist vorzugsweise aus einem Flachmaterial hergestellt, wobei die erste Biegerichtung und die zweite Biegerichtung senkrecht zu einer sekundären Erstreckungsrichtung und der Haupterstreckungsrichtung der Tragschiene ausgerichtet sind. Die Haupterstreckungsrichtung bezeichnet diejenige Richtung, in der die Tragschiene die größte Ausdehnung aufweist. Die sekundäre Erstreckungsrichtung bezeichnet diejenige Richtung, in der die Tragschiene nach der Haupterstreckungsrichtung die zweitgrößte Ausdehnung aufweist. Die Ausdehnung der Tragschiene in Biegerichtung, bzw. in erster Biegerichtung und zweiter Biegerichtung, entspricht somit bei einem Flachmaterial der Dicke der Tragschiene. Dabei verläuft die Tragschiene in der Haupterstreckungsrichtung nicht linear, sondern ist gebogen. Der Verlauf der gebogenen Tragschiene weist somit Anteile in Erstreckungsrichtung und in den ersten und zweiten Biegerichtungen auf.

Erfindungsgemäß erstreckt sich die Sperrvorrichtung entlang des Mittenabschnitts und ist mit dem Mittenabschnitt verbunden. Verbunden im Sinne der Erfindung bedeutet im weitesten Sinne die Möglichkeit einer Kraftübertragung von der Sperrvorrichtung auf den Mittenabschnitt und/oder umgekehrt. Dabei kann die Sperrvorrichtung einteilig ausgeführt sein mit dem Mittenabschnitt, oder durch Befestigungsmittel verbunden, wie beispielsweise Schraub-, Schweiß- oder Nietverbindungen. Ebenso kann zwischen der Sperrvorrichtung und dem Mittenabschnitt eine lösbare Steckverbindung vorgesehen sein. Alternativ sind Ausführungsformen denkbar, bei denen die Sperrvorrichtung den Mittenabschnitt überspannt und beispielsweise mittelbar, über den Gleitkufenabschnitt und/oder über den Befestigungsabschnitt, auf den Mittenabschnitt versteifend wirkt.

Die Sperrvorrichtung weist bevorzugt ein Zugelement und/oder ein Druckelement auf. Das Druckelement wird unter der Biegebeanspruchung in der ersten Biegerichtung auf Druck beansprucht und wirkt dadurch bezüglich einer Biegebeanspruchung des Mittenabschnitts versteifend. Die versteifende Wirkung des Druckelements ist bezüglich der Biegebeanspruchung des Mittenabschnitts in der ersten Biegerichtung größer, da das Druckelement Druckkräfte aufnimmt, während es bei Biegebeanspruchung des Mittenabschnitts in der zweiten Biegerichtung beispielsweise frei beweglich ist oder zumindest geringere Kräfte aufnimmt. Zusätzlich oder alternativ weist die Sperrvorrichtung ein Zugelement auf. Das Zugelement wird unter der Biegebeanspruchung in der ersten Biegerichtung auf Zug beansprucht und wirkt dadurch bezüglich einer Biegebeanspruchung des Mittenabschnitts versteifend. Die versteifende Wirkung des Zugelements ist bezüglich der Biegebeanspruchung des Mittenabschnitts in der ersten Biegerichtung größer als in der zweiten Biegerichtung, indem über das Zugelement übertragbare Zugkräfte größer sind als über das Zugelement übertragbare Druckkräfte. Das Zugelement ist beispielsweise ein Seil oder ein Federblech.

Gemäß einer weiteren bevorzugten Ausführungsform weist die Sperrvorrichtung ein erstes Ende und ein zweites Ende auf, wobei das erste Ende mit dem Mittenabschnitt der Tragschiene verbunden ist. Die Sperrvorrichtung ist vorzugsweise in mindestens einem Punkt mit dem Mittenabschnitt verbunden. Je nach Ausführungsform sind zwei oder mehr Verbindungen der Sperrvorrichtung mit dem Mittenabschnitt vorgesehen.

Gemäß einer besonders bevorzugten Ausführungsform bildet die Sperrvorrichtung so mit dem Mittenabschnitt ein Gelenk aus, wobei eine Bewegung des Gelenks durch die Biegebeanspruchung des Mittenabschnitts in der ersten Biegerichtung in mindestens einem Freiheitsgrad des Gelenks blockiert ist. Eine Bewegung des Gelenks in dem mindestens einen Freiheitsgrad durch die Biegebeanspruchung des Mittenabschnitts in der zweiten Biegerichtung ist frei. Dadurch wird das Gelenk, welches durch den Mittenabschnitt und die Sperrvorrichtung gebildet ist, bezüglich der Biegebeanspruchung des Mittenabschnitts in der ersten Biegerichtung versteifend und bezüglich der Biegebeanspruchung des Mittenabschnitts in der zweiten Biegerichtung nicht.

Erfindungsgemäß ist vorgesehen, dass unter der Biegebeanspruchung eine Relativbewegung der Sperrvorrichtung zu dem Mittenabschnitt hervorgerufen wird, wobei die Relativbewegung unter der Biegebeanspruchung in der ersten Biegerichtung stärker eingeschränkt ist, als unter der Biegebeanspruchung in der zweiten Biegerichtung. Besonders bevorzugt ist die Relativbewegung unter der Biegebeanspruchung in der ersten Biegerichtung durch die Sperrvorrichtung blockiert.

Gemäß einer weiteren bevorzugten Ausführungsform weist die Sperrvorrichtung mindestens einen ersten Anschlag auf, wobei der erste Anschlag mit einem zweiten Anschlag zusammenwirkt, um die Relativbewegung unter der Biegebeanspruchung in der ersten Biegerichtung zu blockieren. Der erste Anschlag wirkt insbesondere mit dem zweiten Anschlag derart zusammen, dass die Bewegung in mindestens einem Freiheitsgrad des Gelenks unter der Biegebeanspruchung in der ersten Biegerichtung blockiert ist.

Gemäß einer weiteren bevorzugten Ausführungsform ist vorgesehen, dass der zweite Anschlag an der Tragschiene ausgebildet ist.

Weiterhin bevorzugt ist die Sperrvorrichtung mehrteilig mit mindestens zwei Sperrgliedern ausgebildet. Die mehrteilige Sperrvorrichtung ist insbesondere aus untereinander verbundenen Sperrgliedern gebildet. Die Sperrglieder sind vorzugsweise untereinander bewegbar ausgebildet. Insbesondere bilden die Sperrglieder der Sperrvorrichtung ein Sperrgliedergelenk. Besonders bevorzugt sind mehrere der Sperrglieder in dem Mittenabschnitt mit der Tragschiene verbunden. Insbesondere sind sämtliche Sperrglieder der Sperrvorrichtung in dem Mittenabschnitt mit der Tragschiene verbunden.

Gemäß einer weiteren bevorzugten Ausführungsform ist vorgesehen, dass der zweite Anschlag an der Sperrvorrichtung ausgebildet ist.

Gemäß einer weiteren bevorzugten Ausführungsform ist vorgesehen, dass der erste Anschlag in mindestens zwei erste Teilanschläge aufgeteilt ist und der zweite Anschlag in mindestens zwei zweite Teilanschläge aufgeteilt ist, wobei die jeweils ersten Teilanschläge mit den jeweils zweiten Teilanschlägen zusammenwirken, um die Relativbewegung unter der Biegebeanspruchung in der ersten Biegerichtung zu blockieren, bzw. um die Bewegung des Gelenks in mindestens einem seiner Freiheitsgrade zu blockieren. Unter den ersten Teilanschlägen und den zweiten Teilanschlägen im Sinne der Erfindung sind separate Anschläge zu verstehen, welche hier als Teilanschläge bezeichnet werden, da die ersten Teilanschläge und die zweiten Teilanschläge gemeinsam die gleiche Wirkung haben, wie der einfach ausgebildete erste Anschlag und der einfach ausgebildete zweite Anschlag. Dazu müssen die ersten Teilanschläge und die zweiten Teilanschläge nicht zwingend zeitgleich unter der Biegebeanspruchung in der ersten Biegerichtung in Anlage zueinander gelangen, sondern dies kann auch zeitlich versetzt erfolgen.

Gemäß einer weiteren bevorzugten Ausführungsform sind die Sperrglieder relativ zueinander winkelverstellbar um eine Achse senkrecht zu der Haupterstreckungsrichtung angeordnet, wobei eine Winkelverstellung in der ersten Biegerichtung durch die Sperrglieder blockiert ist und in der zweiten Biegerichtung frei ist. Bei dem durch den Mittenabschnitt und die Sperrvorrichtung gebildeten Gelenk handelt es sich in diesem Fall um ein Drehgelenk. Bei dem durch die Sperrglieder gebildeten Sperrgliedergelenk handelt es sich in diesem Fall ebenfalls um ein Drehgelenk.

Gemäß einer weiteren bevorzugten Ausführungsform ist vorgesehen, dass die Sperrvorrichtung ein erstes Sperrglied und ein zweites Sperrglied aufweist, wobei das erste Sperrglied mit dem zweiten Sperrglied über einen Drehpunkt verbunden ist. Als Drehpunkt im Sinne der Erfindung ist ein Bauteil zu verstehen, welches das erste Sperrglied mit dem zweiten Sperrglied verbindet und eine Winkelverstellung des ersten Sperrgliedes relativ zu dem zweiten Sperrglied ermöglicht. Die Bezeichnung Drehpunkt schränkt das Bauteil nicht auf eine punktförmige Ausgestaltung ein. Insbesondere kann der Drehpunkt als Bolzen ausgebildet sein, wobei das Drehgelenk, welches durch das erste Sperrglied, das zweite Sperrglied und den Drehpunkt gebildet wird, nach Art eines Scharniers ausgebildet ist. Der als Bolzen ausgebildete Drehpunkt muss dabei nicht notwendigerweise eine längliche Form aufweisen. Vielmehr ist insbesondere vorgesehen, dass ein Durchmesser des als Bolzen ausgebildeten Drehpunkts größer ist als dessen Länge.

Gemäß einer weiteren bevorzugten Ausführungsform ist vorgesehen, dass der erste Anschlag an dem Drehpunkt angeordnet ist, wobei der zweite Anschlag an der Tragschiene angeordnet ist. Gemäß dieser Ausführungsform erlaubt der erste Anschlag an dem Drehpunkt eine Winkelverstellung des ersten Sperrglieds relativ zu dem zweiten Sperrglied unter einer Biegebeanspruchung in der zweiten Biegerichtung, indem der erste Anschlag sich von dem zweiten Anschlag an der Tragschiene entfernt. Bei einer Biegebeanspruchung in der ersten Biegerichtung kommt der erste Anschlag an dem Drehpunkt mit dem zweiten Anschlag an der Tragschiene in Anlage und blockiert dadurch eine weitergehende Winkelverstellung des ersten Sperrglieds relativ zu dem zweiten Sperrglied. Der erste Anschlag ist insbesondere als Absatz oder Vorsprung an dem bolzenförmigen Drehpunkt ausgebildet. Der zweite Anschlag an der Tragschiene ist vorzugsweise durch die Tragschiene selbst gebildet.

Gemäß einer weiteren bevorzugten Ausführungsform sind einer der ersten Teilanschläge an dem ersten Sperrglied und ein weiterer der ersten Teilanschläge an dem zweiten Sperrglied angeordnet, wobei die zweiten Teilanschläge an der Tragschiene angeordnet sind. Diese Ausführungsform stellt eine Alternative zu der zuvor beschriebenen Ausführungsform dar, welche grundsätzlich die gleiche Wirkung aufweist. Statt des ersten Anschlags an dem Drehpunkt sind zwei getrennte erste Teilanschläge an dem ersten Sperrglied und dem zweiten Sperrglied angeordnet, welche unter Biegebeanspruchung in der ersten Biegerichtung mit der Tragschiene in Anlage kommen und so eine weitere Winkelverstellung des ersten Sperrglieds relativ zu dem zweiten Sperrglied in der ersten Biegerichtung blockieren. Die zweiten Teilanschläge sind vorzugsweise durch diejenigen Punkte an der Tragschiene gebildet, in denen die ersten Teilanschläge mit der Tragschiene in Anlage gelangen.

Gemäß einer weiteren bevorzugten Ausführungsform ist vorgesehen, dass einer der ersten Teilanschläge an dem ersten Sperrglied und ein weiterer der ersten Teilanschläge an dem zweiten Sperrglied angeordnet sind, wobei die zweiten Teilanschläge an dem Drehpunkt angeordnet sind. Dazu ist insbesondere der Drehpunkt derart ausgestaltet, dass das erste Sperrglied relativ zu dem zweiten Sperrglied über einen ersten Umfangsbereich des Drehpunkts relativ zueinander winkelverstellbar sind, während die Winkelverstellbarkeit des ersten Sperrglieds und des zweiten Sperrglieds über einen zweiten Umfangsbereich des Drehpunkts blockiert sind. Vorzugsweise weist dazu der bolzenförmig ausgestaltete Drehpunkt einen Querschnitt auf, der von einer kreisrunden Form abweicht. Die von der Kreisform abweichenden Bereiche bilden in dem zweiten Umfangsbereich zugleich die zweiten Teilanschläge.

Gemäß einer weiteren bevorzugten Ausführungsform ist vorgesehen, dass die Tragschiene in dem Mittenabschnitt eine Ausnehmung aufweist, wobei die Sperrvorrichtung sich zumindest abschnittsweise durch die Ausnehmung erstreckt. Das so durch den Mittenabschnitt und die Sperrvorrichtung gebildete Gelenk entspricht einem Drehschubgelenk. Bevorzugt ist der zweite Anschlag an der Ausnehmung gebildet. Dadurch wird vorteilhafterweise die Schubbewegung in dem Drehschubgelenk durch den zweiten Anschlag blockiert. Der erste Anschlag ist dabei insbesondere an der Sperrvorrichtung ausgebildet.

Gemäß einer weiteren bevorzugten Ausführungsform ist vorgesehen, dass ein Halter an der Tragschiene angeordnet ist, wobei der Halter zur Abstützung an einem Mähfinger dient. Besonders bevorzugt ist der Halter an der Sperrvorrichtung ausgebildet. Beispielsweise bildet der Halter das zweite Ende der Sperrvorrichtung.

Nachfolgend wird die Erfindung anhand von Ausführungsbeispielen mit Bezug auf die beiliegenden Zeichnungen näher erläutert. Die Ausführungen sind beispielhaft und schränken den allgemeinen Erfindungsgedanken nicht ein.

Es zeigen
Figuren 1a und 1b eine erste Ausführungsform des erfindungsgemäßen Ährenhebers in verschiedenen Ansichten,
Figuren 2a, 2b und 2ceine weitere Ausführungsform des erfindungsgemäßen Ährenhebers in verschiedenen Ansichten,
Figuren 3a, 3b und 3c eine weitere Ausführungsform des erfindungsgemäßen Ährenhebers in verschiedenen Ansichten,
Figuren 4a und 4b eine weitere Ausführungsform des erfindungsgemäßen Ährenhebers in verschiedenen Ansichten,
Figuren 5a und 5b eine weitere Ausführungsform des erfindungsgemäßen Ährenhebers in verschiedenen Ansichten,
Figuren 6a, 6b und 6c eine weitere Ausführungsform des erfindungsgemäßen Ährenhebers in verschiedenen Ansichten,
Figuren 7a und 7b eine weitere Ausführungsform des erfindungsgemäßen Ährenhebers in verschiedenen Ansichten,
Figuren 8a, 8b und 8c eine weitere Ausführungsform des erfindungsgemäßen Ährenhebers in verschiedenen Ansichten,
Figuren 9a und 9b eine weitere Ausführungsform des erfindungsgemäßen Ährenhebers in verschiedenen Ansichten,
Figuren 10a und 10b eine Abwandlung der Ausführungsform gemäß Figur 2a in verschiedenen Ansichten,
Figuren 11a, 11 b und 11c eine Abwandlung der Ausführungsform gemäß Figur 9a in verschiedenen Ansichten,
Figuren 12a und 12b eine weitere Ausführungsform des erfindungsgemäßen Ährenhebers in verschiedenen Ansichten,
Figuren 13a und 13b eine weitere Ausführungsform des erfindungsgemäßen Ährenhebers in verschiedenen Ansichten,
Figuren 14a und 14b eine weitere Ausführungsform des erfindungsgemäßen Ährenhebers in verschiedenen Ansichten,
Figuren 15a, 15b und 15c eine weitere Ausführungsform des erfindungsgemäßen Ährenhebers in verschiedenen Ansichten,
Figuren 16a, 16b, 16c und 16d eine weitere Ausführungsform des erfindungsgemäßen Ährenhebers in verschiedenen Ansichten,
Figuren 17a, 17b, 17c und 17d eine weitere Ausführungsform des erfindungsgemäßen Ährenhebers in verschiedenen Ansichten.

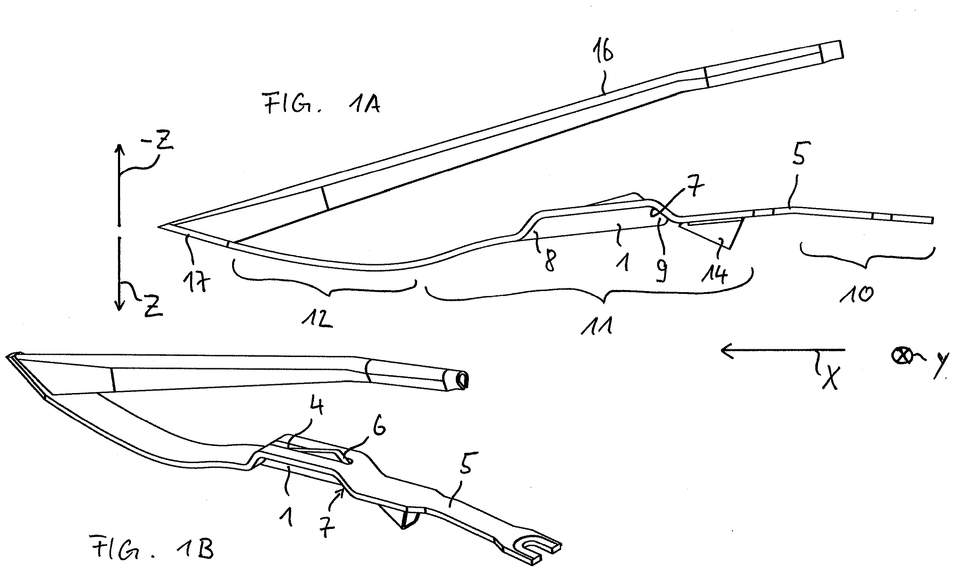

In den Figuren 1a und 1b ist eine erste Ausführungsform des erfindungsgemäßen Ährenhebers dargestellt, wobei Figur 1a eine Seitenansicht und Figur 1b eine perspektivische Ansicht zeigt. Der erfindungsgemäße Ährenheber für Erntegut weist eine Tragschiene 5 auf, welche sich in einer Haupterstreckungsrichtung X erstreckt. Die Haupterstreckungsrichtung X ist mit einem Pfeil in der Figur 1a dargestellt. Die Haupterstreckungsrichtung X entspricht einer Fahrtrichtung einer Erntemaschine, wenn der Ährenheber erfindungsgemäß montiert ist. In der perspektivischen Darstellung der Figur 1b ist erkennbar, dass die Tragschiene 5 aus einem Flachmaterial gefertigt ist, dessen sekundäre Erstreckungsrichtung Y orthogonal zu der Haupterstreckungsrichtung X ausgerichtet ist. In der Figur 1a ist die sekundäre Erstreckungsrichtung Y in die Zeichenebene hinein gerichtet. Eine dritte Raumrichtung, welche zu der Haupterstreckungsrichtung X und der sekundären Erstreckungsrichtung Y orthogonal ausgerichtet ist, wird mit dem Bezugszeichen Z bezeichnet, wobei die dritte Raumrichtung Z hier in der Figur 1a mit zwei Pfeilen dargestellt ist. Der mit dem Bezugszeichen Z beschriftete Pfeil gibt die positive Richtung an, während der mit -Z beschriftete Pfeil die entgegengesetzte, also negative Richtung bezeichnet. Im Betrieb wird der Ährenheber dicht über den Boden geführt, was dazu führt, dass dieser durch Bodenunebenheiten oder durch größere Steine im Boden ausgelenkt wird. Zu diesem Zweck ist die Tragschiene 5 zumindest bereichsweise biegeelastisch ausgeführt, so dass die Tragschiene 5 in der Raumrichtung Z biegbar ist. Im Folgenden wird die positive Raumrichtung Z als erste Biegerichtung Z bezeichnet und die entgegengesetzte Raumrichtung -Z als zweite Biegerichtung -Z. Kommt es zu einem Verbiegen der Tragschiene 5 in der ersten Biegerichtung Z, beispielsweise weil eine Spitze 17 des Ährenhebers in eine Unebenheit im Boden eingedrungen ist, so besteht die Gefahr, dass die Tragschiene 5 weiter in Richtung der ersten Biegerichtung Z verbogen wird und die elastische Rückstellkraft der Tragschiene 5 nicht ausreicht, um die Spitze 17 des Ährenhebers wieder oberhalb des Bodens zu führen. In dem Fall kommt es zu einer plastischen Verbiegung in der ersten Biegerichtung X, so dass der beschädigte Ährenheber ausgetauscht werden muss. Dieses Problem wird durch den erfindungsgemäßen Ährenheber vermieden.

Die Tragschiene 5 weist in der Haupterstreckungsrichtung X hintereinander angeordnet einen Befestigungsabschnitt 10, einen Mittenabschnitt 11 und einen Gleitkufenabschnitt 12 auf. Bezogen auf die Fahrtrichtung der Erntemaschine ist der Befestigungsabschnitt 10 hinten angeordnet und dient zur Befestigung der Tragschiene an einem nicht dargestellten Mähbalken der Erntemaschine. Der Gleitkufenabschnitt 12 befindet sich nahe eines vorderen Endes 17 bzw. der Spitze 17 der Tragschiene 5. Der Gleitkufenabschnitt 12 dient der Führung des Ährenhebers über die Bodenoberfläche. An dem vorderen Ende 17 der Tragschiene 5 ist in der Regel ein Halmheber 16 befestigt.

Auf der Unterscheite der Tragschiene 5 ist ein Halter 14 angeordnet, welcher dazu dient, einen Mähfinger (nicht dargestellt) der Erntemaschine aufzunehmen. Der Mittenabschnitt 11 der Tragschiene 5 ist derjenige Abschnitt, in welchem die Durchbiegung der Tragschiene 5 im Wesentlichen stattfindet. Der Mittenabschnitt 11 ist zwischen dem Befestigungsabschnitt 10 und dem Gleitkufenabschnitt 12 angeordnet, ohne dabei auf die tatsächliche Mitte der Tragschiene 5 festgelegt zu sein und ohne notwendigerweise unmittelbar an dem benachbarten Befestigungsabschnitt 10 und dem Gleitkufenabschnitt 12 anzugrenzen.

Der bisher beschriebene grundlegende Aufbau des erfindungsgemäßen Ährenhebers gilt ebenso für die nachfolgend zu beschreibenden weiteren Ausführungsformen, so dass der grundlegende Aufbau nachfolgend nicht für jede Ausführungsform erneut beschrieben wird. Die Haupterstreckungsrichtung X, die sekundäre Erstreckungsrichtung Y, die erste Biegerichtung Z und die zweite Biegerichtung -Z sind nur in der Figur 1a dargestellt, gelten jedoch ebenso für alle Seitenansichten der nachfolgend zu beschreibenden Ausführungsformen.

Bei der Ausführungsform gemäß der Figuren 1a und 1b, die nachfolgend gemeinsam beschrieben werden, weist die Tragschiene 5 in dem Mittenabschnitt 11 eine Sperrvorrichtung 1 auf. Diese Sperrvorrichtung 1 wirkt bezüglich einer Biegebeanspruchung des Mittenabschnitts 11 in der ersten Biegerichtung Z versteifend. Bezüglich einer Biegebeanspruchung des Mittenabschnitts 11 in der zweiten Biegerichtung -Z ist die Sperrvorrichtung 1 hingegen wirkungslos. Wirkungslos ist im Sinne der Erfindung so zu verstehen, dass ein Durchbiegen der Tragschiene in der zweiten Biegerichtung -Z möglich ist und nicht von der Sperrvorrichtung 1 behindert wird. Die Sperrvorrichtung 1 weist ein vorderes Ende 8 und ein hinteres Ende 9 auf, wobei die Begriffe vorne und hinten sich auf die Fahrtrichtung der Erntemaschine beziehen. Im dargestellten Ausführungsbeispiel ist das vordere Ende 8 der Sperrvorrichtung 1 mit der Tragschiene 5 verbunden, wobei die Art der Verbindung beliebig gewählt sein kann. In dem dargestellten Ausführungsbeispiel ist die Sperrvorrichtung 1 mit dem vorderen Ende 8 beispielsweise an der Tragschiene 5 angeschweißt. Bei der Sperrvorrichtung 1 handelt es sich beispielsweise um ein Blech, dessen Haupterstreckungsrichtungen in der Haupterstreckungsrichtung X und in der Biegerichtung Z angeordnet sind. Ein solches Blech, welches im Wesentlichen senkrecht zu dem Flachmaterial der Tragschiene 5 angeordnet ist, wird beispielsweise auch als Versteifungsblech bezeichnet. In dem dargestellten Ausführungsbeispiel weist die Tragschiene 5 eine Ausnehmung 4 in Form eines Schlitzes in dem Mittenabschnitt 11 auf, wobei das Blech der Sperrvorrichtung 1 sich durch diesen Schlitz hindurch erstreckt. Dadurch wird die Sperrvorrichtung 1 in der Ausnehmung 4 geführt und kann beispielsweise nicht in der sekundären Erstreckungsrichtung Y abknicken. Die Sperrvorrichtung 1 ist nicht wie ein Aussteifungsblech an mehreren Punkten oder über seine gesamte Länge mit der Tragschiene 5 verbunden, da eine solche Aussteifung das Biegen der Tragschiene 5 nicht nur in der ersten Biegerichtung Z, sondern auch in der zweiten Biegerichtung -Z erschweren bzw. annähernd verhindern würde. Stattdessen ist die Sperrvorrichtung 1 lediglich an ihrem vorderen Ende 8 mit der Tragschiene 5 verbunden und weist an ihrem hinteren oder zweiten Ende 9 einen ersten Anschlag 6 auf, welcher an einem zweiten Anschlag 7 an der Tragschiene 5 anliegt. Der zweite Anschlag 7 an der Tragschiene 5 ist durch eine Biegung der Tragschiene 5 gebildet. Bei einer Biegebeanspruchung der Tragschiene 5 in der zweiten Biegerichtung -Z wird die Tragschiene 5 in dem federelastisch ausgeführten Mittenabschnitt 11 verbogen, so dass der erste Anschlag 6 an der Sperrvorrichtung 1 sich von dem zweiten Anschlag 7 an der Tragschiene 5 entfernt. Die Sperrvorrichtung 1 behindert das Durchbiegen der Tragschiene 5 in der zweiten Biegerichtung -Z daher nicht. Bei einer Biegebeanspruchung in der ersten Biegerichtung Z hingegen wird der erste Anschlag 6 an der Sperrvorrichtung 1 gegen den zweiten Anschlag 7 an der Tragschiene 5 gedrückt, so dass die Sperrvorrichtung 1 gegenüber der Durchbiegung der Tragschiene 5 versteifend wirkt. Anders ausgedrückt bildet die Sperrvorrichtung 1 mit dem Mittenabschnitt 11 der Tragschiene 5 ein Gelenk, in diesem Fall ein Dreh-Schub-Gelenk, da die Sperrvorrichtung 1 in der schlitzförmigen Ausnehmung 4 geführt ist. Die Dreh-Schub-Bewegung, welche durch eine Biegebeanspruchung der Tragschiene 5 in der ersten Biegerichtung Z hervorgerufen wird, ist durch den ersten Anschlag 6 an der Sperrvorrichtung 1 und dem zweiten Anschlag 7 an der Tragschiene 5 gesperrt, während die Dreh-Schub-Bewegung des Gelenks unter einer Biegebeanspruchung der Tragschiene 5 in der zweiten Biegerichtung -Z möglich ist.

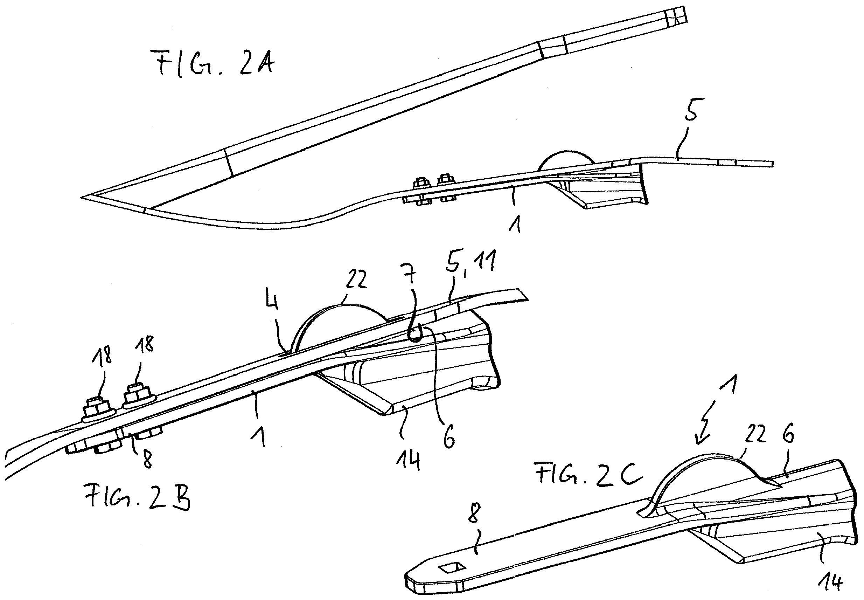

In der Figur 2a ist eine weitere Ausführungsform des erfindungsgemäßen Ährenhebers in einer Seitenansicht dargestellt. Die Figur 2b zeigt den Mittenabschnitt 11 der Tragschiene 5 in einer perspektivischen Ansicht im Detail und die Figur 2c zeigt das Sperrelement alleine in einer perspektivischen Darstellung im Detail. Die Figuren 2a, 2b und 2c werden nachfolgend gemeinsam beschrieben. In der gezeigten Ausführungsform weist die Sperrvorrichtung 1 ein plattenförmiges Element auf, welches mit dem ersten Ende 8 der Sperrvorrichtung 1 durch ein Befestigungselement 18 an der Tragschiene 5 befestigt ist. Das plattenförmige Bauteil der Sperrvorrichtung 1 hat seine Haupterstreckungsrichtungen in einer durch die Haupterstreckungsrichtung X und die sekundäre Erstreckungsrichtung Y gebildeten Ebene. Die Sperrvorrichtung 1 ist mit ihrem plattenförmigen Bauteil somit im Wesentlichen parallel zu der Tragschiene 5 angeordnet und liegt an dieser an. Die Sperrvorrichtung 1 weist ein senkrecht von dem plattenförmigen Bauteil abstehendes Führungselement 22 auf, welches durch die schlitzartige Ausnehmung 4 der Tragschiene 5 geführt ist. An dem hinteren zweiten Ende 9 der Sperrvorrichtung 1 ist der Halter 14 für den Mähfinger vorgesehen. Der erste Anschlag 6 ist auf der der Tragschiene 5 zugeordneten Oberseite der Sperrvorrichtung 1 gebildet, während der zweite Anschlag 7 an der der Sperrvorrichtung 1 zugewandten Unterseite der Tragschiene 5 gebildet ist. Bei einer Biegebeanspruchung der Tragschiene 5 in der ersten Biegerichtung Z liegt der erste Anschlag an dem zweiten Anschlag an, so dass die Sperrvorrichtung als Versteifung der Tragschiene 5 in dem Mittenabschnitt 11 wirkt. Bei einer Biegebeanspruchung der Tragschiene 5 in der zweiten Biegerichtung -Z hingegen entfernt sich das nicht mit der Tragschiene 5 verbundene zweite Ende 9 der Sperrvorrichtung 1 von der Tragschiene 5, so dass der erste Anschlag nicht mehr an dem zweiten Anschlag anliegt. Die Sperrvorrichtung 1 hat dadurch keinen wesentlichen Einfluss auf das Biegeverhalten der Tragschiene 5 in der zweiten Biegerichtung -Z. Der an dem Sperrelement 1 ausgebildete Halter 14 ist daher größer dimensioniert, als üblich, damit der Mähfinger, auf den der Halter 14 aufgesteckt wird (nicht dargestellt), ausreichend Spiel hat, um eine Durchbiegung der Tragschiene 5 in der zweiten Biegerichtung -Z zu gewährleisten.

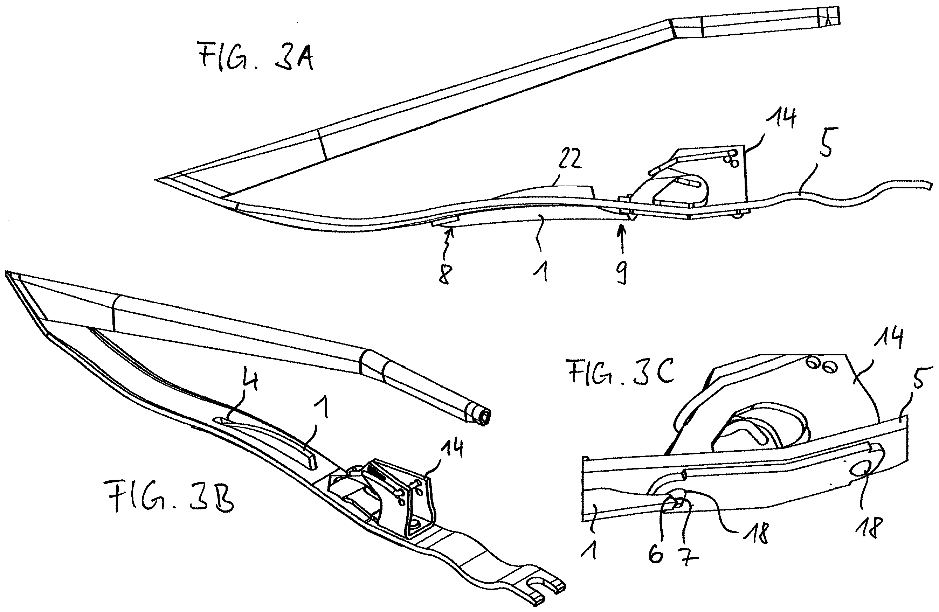

In der Figur 3a ist eine weitere Ausführungsform des erfindungsgemäßen Ährenhebers in einer Seitenansicht dargestellt. Die Figur 3b zeigt die Ausführungsform in einer perspektivischen Ansicht. In der Figur 3c ist ein Detail in einer weiteren perspektivischen Ansicht vergrößert dargestellt. Nachfolgend werden die Figuren 3a, 3b und 3c gemeinsam beschrieben. Die Sperrvorrichtung 1 ist mit dem ersten Ende 8 an der Tragschiene 5 befestigt und besteht im Wesentlichen aus einem Blech, welches mit seinen Haupterstreckungsrichtungen senkrecht zu der Tragschiene 5 ausgerichtet ist. Ein Führungselement 22 der Sperrvorrichtung 1 ist in einer schlitzartigen Ausnehmung 4 der Tragschiene 5 geführt. Der erste Anschlag 6 an der Sperrvorrichtung 1 ist an deren zweitem Ende 9 gebildet und liegt an dem zweiten Anschlag 7 an der Tragschiene 5 an. Der zweite Anschlag 7 ist in dem Ausführungsbeispiel durch das Befestigungsmittel 18 gebildet, mit welchem der Halter 14 auf der Oberseite der Tragschiene 5 befestigt ist. Bei dem Befestigungsmittel 18 handelt es sich beispielsweise um einen Nietkopf. Bei einer Biegebeanspruchung der Tragschiene 5 in der ersten Biegerichtung Z ist die relative Bewegung der Sperrvorrichtung 1 zu der Tragschiene 5 gesperrt, da der erste Anschlag 6 an dem zweiten Anschlag 7 anliegt. Eine Bewegung der Sperrvorrichtung 1 relativ zu der Tragschiene 5 in der Haupterstreckungsrichtung X ist durch das Befestigungsmittel 18 begrenzt. Somit wirkt die Sperrvorrichtung versteifend. Unter einer Biegebeanspruchung in der zweiten Biegerichtung -Z der Tragschiene 5 entfernt sich der erste Anschlag 6 von dem zweiten Anschlag 7. Die Sperrvorrichtung 1 kann sich relativ zu der Tragschiene 5 bewegen und bewirkt somit keine Versteifung der Tragschiene 5 gegenüber der Biegebeanspruchung in der zweiten Biegerichtung -Z.

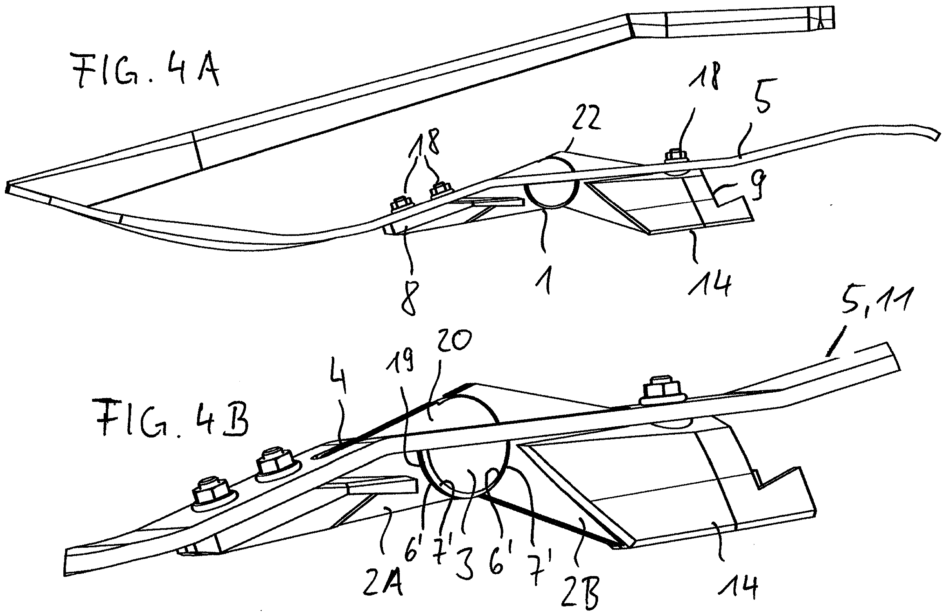

Die Figur 4a zeigt eine weitere Ausführungsform des erfindungsgemäßen Ährenhebers in einer Seitenansicht. In der Figur 4b ist der Mittenabschnitt 11 der Tragschiene 5 in einer perspektivischen Ansicht dargestellt. Die Sperrvorrichtung 1 ist an ihrem vorderen Ende 8 mittels zweier Befestigungselemente 18 mit der Tragschiene 5 verbunden. In dem dargestellten Ausführungsbeispiel ist die Sperrvorrichtung 1 zweiteilig ausgeführt und umfasst ein erstes Sperrglied 2A und ein zweites Sperrglied 2B. Das befestigte vordere Ende 8 ist an dem ersten Sperrglied 2A angeordnet. In dem Ausführungsbeispiel ist auch das zweite Ende 9 der Sperrvorrichtung mit der Tragschiene 5 durch ein Befestigungsmittel 18 verbunden. Das zweite Ende 9 befindet sich an dem zweiten Sperrglied 2B. Die Tragschiene 5 weist eine schlitzförmige Ausnehmung 4 auf, in der ein Führungselement 22 der Sperrvorrichtung geführt ist. Das erste Sperrglied 2A ist mit dem zweiten Sperrglied 2B über einen Drehpunkt 3 verbunden, welcher sich ebenfalls durch die Ausnehmung 4 hindurch erstreckt. Bei dem Drehpunkt 3 handelt es sich insbesondere um eine kreisrunde Scheibe, welche durch einen Schlitz 19 von dem ersten Sperrglied 2A und von dem zweiten Sperrglied 2B getrennt ist. So wirkt der Drehpunkt 3 in der Art eines Scharniers. Mit dem zweiten Sperrglied 2B ist der Drehpunkt nicht verbunden. Mit dem ersten Sperrglied 2A ist der Drehpunkt 3 über eine Verbindung 20 verbunden, da der Schlitz 19 nicht bis in den Bereich der Verbindung 20 geführt ist. Bei der dargestellten Ausführungsform sind nun mehrere erste und zweite Anschläge vorhanden, die miteinander wirken, um die Versteifung der Tragschiene 5 durch die Sperrvorrichtung 1 unter Biegebeanspruchung in der ersten Biegerichtung Z zu ermöglichen, nicht aber in der entgegengesetzten zweiten Biegerichtung -Z. Bei mehreren räumlich getrennten Anschlägen wird nachfolgend die Bezeichnung erste Teilanschläge 6' und zweite Teilanschläge 7' verwendet. Die ersten Teilanschläge 6' sind im Bereich des Schlitzes 19 angeordnet, und zwar an dem ersten Sperrglied 2A und an dem Drehpunkt 3. Die ersten Teilanschläge 6' liegen jeweils an zweiten Teilanschlägen 7' an, die somit ebenfalls im Bereich des Schlitzes 19 angeordnet sind, nämlich dementsprechend an dem Drehpunkt 3 und an dem zweiten Sperrglied 2B. Unter einer Biegebeanspruchung der Führungsschiene 5 in der ersten Biegerichtung Z werden die ersten Teilanschläge 6' gegen die zweiten Teilanschläge 7' gedrückt und die Sperrvorrichtung 1 wirkt versteifend. Bei einer Biegebeanspruchung der Tragschiene 5 in der zweiten Biegerichtung -Z hingegen entfernen sich die ersten Teilanschläge 6' von den zweiten Teilanschlägen 7' und das zweite Sperrglied 2B verdreht sich um den Drehpunkt 3 und ändert somit seine Winkelstellung relativ zu dem ersten Sperrglied 2A, während die Tragschiene 5 in der zweiten Biegerichtung -Z ausgelenkt wird. Die Sperrvorrichtung 1 hat dabei keine versteifende Wirkung.

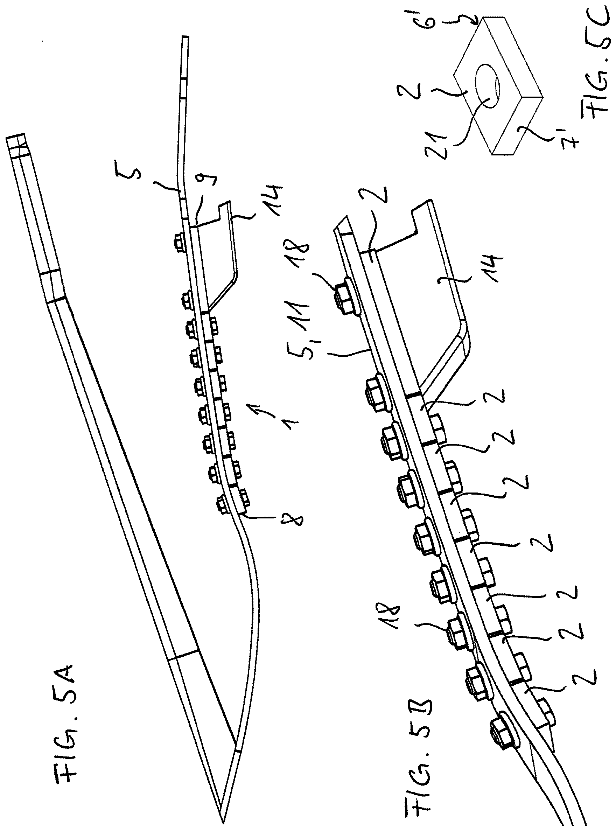

In der Figur 5a ist eine weitere Ausführungsform des erfindungsgemäßen Ährenhebers in einer Seitenansicht dargestellt. Die Figur 5b zeigt den Mittenabschnitt 11 der Tragschiene 5 als Detail in einer vergrößerten Darstellung. In der Figur 5c ist ein weiteres Detail einzeln dargestellt. Bei der gezeigten Ausführungsform weist die Sperrvorrichtung 1 eine Vielzahl von Sperrgliedern 2 auf, die untereinander nicht direkt verbunden sind. Jedes einzelne der Sperrglieder 2 ist durch ein Befestigungsmittel 18 mit dem Mittenabschnitt 11 der Tragschiene 5 verbunden. In der Figur 5c ist ein einzelnes der Sperrglieder 2 perspektivisch dargestellt. Es weist eine Bohrung 21 zur Aufnahme des Befestigungsmittels 18 auf. Die ersten Teilanschläge 6' sind jeweils auf einer Seite des quaderförmigen Sperrglieds 2 angeordnet, während die jeweils zweiten Teilanschläge 7' an der dem ersten Teilanschlag 6' gegenüberliegenden Fläche gebildet sind. Somit liegen zwischen zwei benachbarten Sperrgliedern 2 stets ein erster Teilanschlag 6' und ein zweiter Teilanschlag 7' gegeneinander an. In der dargestellten Ausführungsform trägt eines der Sperrglieder 2 den Halter 14 zur Aufnahme des Mähfingers (nicht dargestellt). Die Sperrglieder sind untereinander nicht unmittelbar verbunden, jedoch mittelbar über die Tragschiene 5. Unter einer Biegebeanspruchung der Tragschiene 5 in der ersten Biegerichtung Z werden die ersten Teilanschläge 6' gegen die zweiten Teilanschläge 7' gedrückt und die Sperrglieder 2 gemeinsam bilden die aussteifende Sperrvorrichtung 1. Bei einer Biegebeanspruchung in der entgegengesetzten zweiten Biegerichtung -Z hingegen entfernen sich die ersten Teilanschläge 6' von den zweiten Teilanschlägen 7' und die einzelnen Sperrglieder 2 haben keinen Einfluss auf das Biegeverhalten der Tragschiene 5.

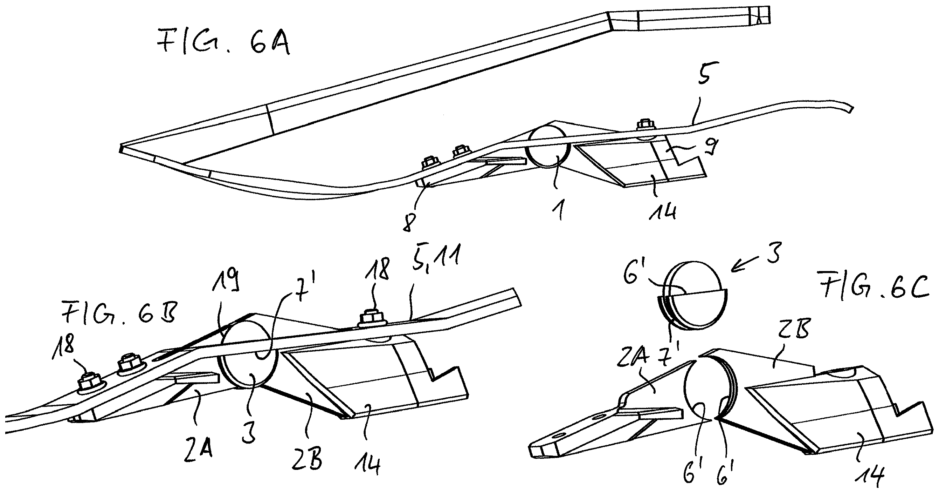

In der Figur 6a ist eine weitere Ausführungsform des erfindungsgemäßen Ährenhebers in einer Seitenansicht dargestellt. Die Figur 6b zeigt den Mittenabschnitt 11 der Tragschiene 5 als Detail in einer vergrößerten perspektivischen Darstellung. In der Figur 6c ist die Sperrvorrichtung alleine und in Einzelteilen perspektivisch dargestellt. Die Figuren 6a, 6b und 6c werden gemeinsam beschrieben. Wie am deutlichsten in der Figur 6c zu erkennen, ist die Sperrvorrichtung aus drei einzelnen, nicht verbundenen Einzelteilen aufgebaut, nämlich aus dem ersten Sperrglied 2A, dem Drehpunkt 3 und dem zweiten Sperrglied 2B. Das erste Sperrglied 2A umfasst das erste vordere Ende 8 der Sperrvorrichtung 1, welches mit Befestigungsmitteln 18 mit dem Mittenabschnitt 11 der Tragschiene 5 verbunden ist. Das zweite Sperrglied 2B mit dem zweiten hinteren Ende 9 der Sperrvorrichtung 1 ist ebenfalls über ein Befestigungsmittel 18 mit dem Mittenbereich 11 der Tragschiene 5 verbunden. Des Weiteren ist der Halter 14 an dem zweiten Sperrglied 2B angeordnet. Die Sperrvorrichtung bildet ein Drehgelenk, wobei der Drehpunkt 3 die Form einer kreisrunden Scheibe aufweist, welche in entsprechenden halbkreisförmigen Ausformungen des ersten Sperrglieds 2A und des zweiten Sperrglieds 2B angeordnet ist. Das erste Sperrglied 2A ist somit über den Drehpunkt 3 relativ zu dem zweiten Sperrglied 2B winkelverstellbar. Die das Gelenk ausbildenden, plattenförmigen Teile des ersten Sperrglieds 2A und des zweiten Sperrglieds 2B, sowie der Drehpunkt 3 haben ihre Haupterstreckungsrichtungen in einer Ebene, welche durch die erste Biegerichtung Z und die Haupterstreckungsrichtung X aufgespannt ist. Die sich dazu senkrecht erstreckende Tragschiene 5 weist die schlitzartige Ausnehmung 4 auf, durch welche das erste Sperrglied 2A, das zweite Sperrglied 2B und der Drehpunkt sich jeweils zum Teil hindurch erstrecken. Der Drehpunkt 3 weist einen den ersten Teilanschlag 6' bildenden Absatz auf. Dieser Absatz verläuft in gerader Linie etwa durch den Mittelpunkt des Drehpunkts. Dadurch weist ein halbkreisförmiger Teil der Scheibe, die den Drehpunkt 3 bildet, eine größere Dicke in der sekundären Erstreckungsrichtung Y auf, als die zweite, ebenfalls etwa halbkreisförmige Hälfte dieser Scheibe. Der den ersten Teilanschlag 6' bildende Absatz ist vorzugsweise auf beiden Seiten des Drehpunkts ausgebildet, so dass der Drehpunkt zwei erste Teilanschläge 6' aufweist. Wie insbesondere den Figuren 6a und 6b zu entnehmen ist, liegen die Teilanschläge 6', welche an dem Drehpunkt 3 als Absatz ausgebildet sind, an der Tragschiene 5 an, so dass die entsprechenden zweiten Teilanschläge 7' an der Tragschiene 5 ausgebildet sind. Unter einer Biegebeanspruchung der Tragschiene 5 in der ersten Biegerichtung Z kann das erste Sperrglied 2A relativ zu dem zweiten Sperrglied 2B nicht um den Drehpunkt gedreht werden, da sowohl das erste Sperrglied 2A als auch das zweite Sperrglied 2B mit der Tragschiene 5 verbunden sind. Um eine solche Winkelverstellung zu ermöglichen, müsste sich der Drehpunkt 3 mit den plattenförmigen Bauteilen des ersten Sperrglieds 2A und des zweiten Sperrglieds 2B weiter durch die schlitzförmige Ausnehmung 4 hindurch bewegen. Dies wird jedoch durch die ersten Anschläge 6' an dem Drehpunkt verhindert, da die die ersten Teilanschläge 6' bildenden Absätze an dem Drehpunkt an der Tragschiene 5 anliegen und somit eine Bewegung des Drehpunkts weiter durch die Ausnehmung 4 hindurch verhindern. Aus diesem Grund wirkt die Sperrvorrichtung 1 gegenüber einem Biegemoment in der ersten Biegerichtung Z versteifend. Bei einer Biegebeanspruchung der Tragschiene 5 in der zweiten Biegerichtung -Z hingegen kann das erste Sperrglied 2A relativ zu dem zweiten Sperrglied 2B um den Drehpunkt 3 herum verstellt werden, da der Drehpunkt 3 sich in Richtung der ersten Biegerichtung Z nach unten aus der Ausnehmung 4 heraus bewegt. Dabei entfernen sich die ersten Teilanschläge 6' an dem Drehpunkt 3 von den zweiten Teilanschlägen 7' an der Tragschiene 5, so dass die Sperrvorrichtung 1 das Durchbiegen der Tragschiene 5 in der zweiten Biegerichtung -Z nicht wesentlich beeinflusst. In der Figur 6c sind des Weiteren die Oberflächen der halbkreisförmigen Ausnehmungen an dem ersten Sperrglied 2A und an dem zweiten Sperrglied 2B als erste Teilanschläge 6' bezeichnet. Diese wirken mit der Mantelfläche des scheibenförmigen Drehpunkts 3 als zweitem Teilanschlag 7' zusammen.

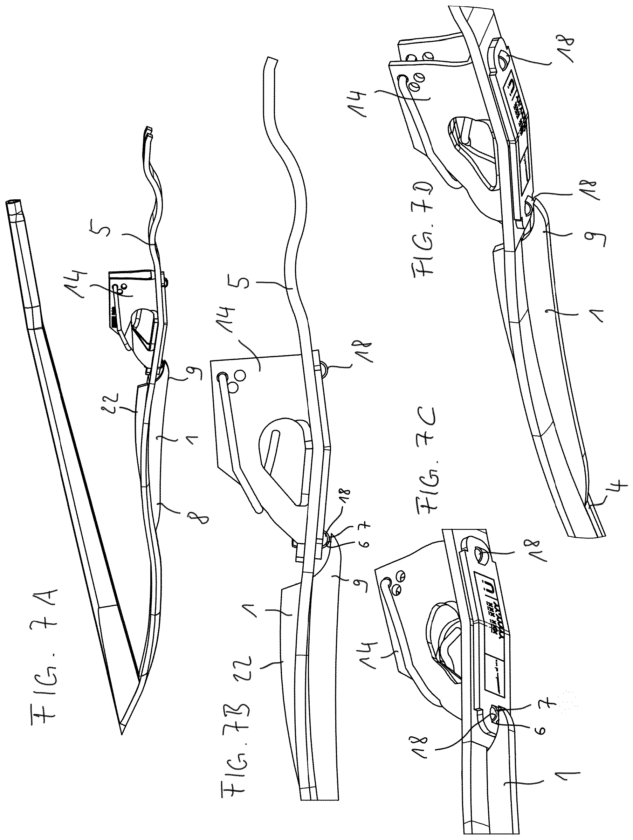

In der Figur 7a ist eine weitere Ausführungsform des erfindungsgemäßen Ährenhebers in einer perspektivischen Ansicht dargestellt. Die Figur 7b zeigt die Ausführungsform vergrößert als Detail in einer Seitenansicht. In den Figuren 7c und 7d ist das Detail in weiteren perspektivischen Ansichten vergrößert dargestellt. Nachfolgend werden die Figuren 7a, 7b, 7c und 7d gemeinsam beschrieben. Die Sperrvorrichtung 1 ist mit dem ersten Ende 8 an der Tragschiene 5 befestigt. Ein Führungselement 22 der Sperrvorrichtung 1 ist in einer schlitzartigen Ausnehmung 4 der Tragschiene 5 geführt. Der erste Anschlag 6 an der Sperrvorrichtung 1 ist an deren der Tragschiene 5 zugewandten Oberseite im Bereich des zweiten Endes 9 gebildet, und liegt an dem zweiten Anschlag 7 an der Tragschiene 5 an. Der zweite Anschlag 7 ist in dem Ausführungsbeispiel durch ein Befestigungsmittel 18, mit welchem der Halter 14 auf der Oberseite der Tragschiene 5 befestigt ist, gebildet. Bei dem Befestigungsmittel 18 handelt es sich beispielsweise um einen Nietkopf. Bei einer Biegebeanspruchung der Tragschiene 5 in der ersten Biegerichtung Z liegt der erste Anschlag 6 an dem zweiten Anschlag 7 an. Das zweite Ende 9 wird nach oben gegen das Befestigungsmittel 18 gedrückt. Somit wirkt die Sperrvorrichtung 1 versteifend. Unter einer Biegebeanspruchung in der zweiten Biegerichtung -Z der Tragschiene 5 entfernt sich der erste Anschlag 6 von dem zweiten Anschlag 7, da das zweite Ende 9 nicht mit der Tragschiene 5 verbunden ist. Die Sperrvorrichtung 1 bewirkt somit eine geringere Versteifung der Tragschiene 5 gegenüber der Biegebeanspruchung in der zweiten Biegerichtung -Z.

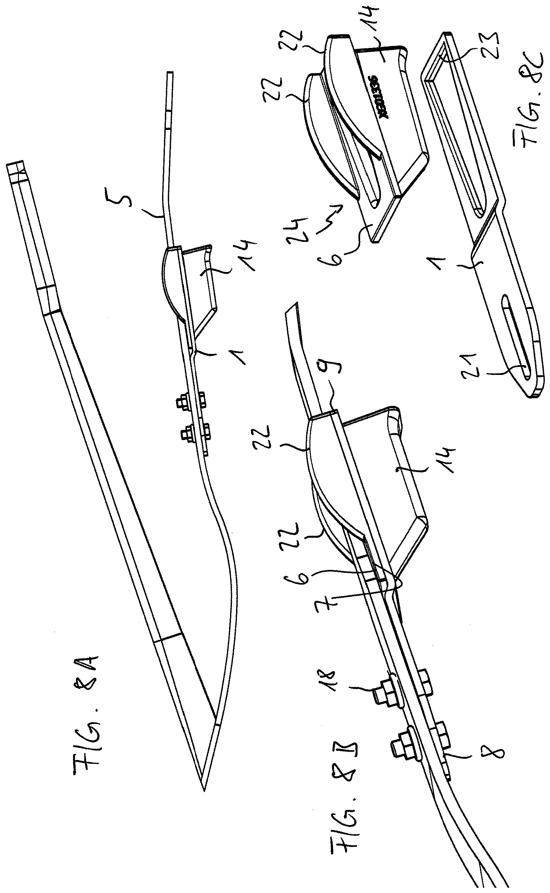

In der Figur 8a ist eine weitere Ausführungsform des erfindungsgemäßen Ährenhebers in einer Seitenansicht dargestellt. Die Figur 8b zeigt den Mittenabschnitt 11 der Tragschiene 5 als Detail in einer vergrößerten perspektivischen Darstellung. In der Figur 8c ist die Sperrvorrichtung 1 allein in ihren Einzelteilen als Detail perspektivisch dargestellt. Bei der gezeigten Ausführungsform ist die Sperrvorrichtung 1 als plattenförmiges Bauteil ausgeführt, dessen Haupterstreckungsrichtungen in einer Ebene liegen, welche durch die Haupterstreckungsrichtung X und die sekundäre Erstreckungsrichtung Y aufgespannt ist. Die plattenförmige Sperrvorrichtung ist somit parallel zu der Tragschiene 5 angeordnet. Das erste Ende 8 der Sperrvorrichtung 1 ist mit Befestigungsmitteln 18 mit der Tragschiene 5 verbunden. Das zweite Ende 9 der Sperrvorrichtung 1 ist nicht mit der Tragschiene 5 verbunden. In der Figur 8c ist erkennbar, dass die Sperrvorrichtung 1 an ihrem ersten Ende 8 eine Bohrung 21 zur Aufnahme der Befestigungsmittel 18 aufweist. Etwa auf halber Länge der Sperrvorrichtung 1 in der Haupterstreckungsrichtung X gesehen, befindet sich eine Kröpfung, so dass der hintere Teil der Sperrvorrichtung 1 mit dem zweiten Ende 9 um etwa eine Plattendicke der Sperrvorrichtung von der Tragschiene 5 absteht, während der vordere Teil der Sperrvorrichtung 1 mit dem ersten Ende 8 direkt an der Tragschiene 5 anliegt. Der hintere Teil mit dem zweiten Ende 9 der Sperrvorrichtung 1 weist eine Aufnahmeöffnung 23 auf, welche zur Aufnahme eines Einsatzes 24 dient. Der Einsatz 24 besteht aus einem plattenförmigen Bauteil, welches parallel zu dem hinteren Teil der Sperrvorrichtung 1 mit dem zweiten Ende 9 angeordnet ist, so dass dieses plattenförmige Bauteil des Einsatzes 24 zwischen dem hinteren Teil der Sperrvorrichtung 1 und der Tragschiene 5 liegt. Von dem plattenförmigen Bauteil des Einsatzes 24 erstrecken sich zwei Führungselemente 22 etwa senkrecht dazu, so dass diese die Tragschiene 5 beidseitig umfassen. Die zwei die Tragschiene 5 außen umfassenden Führungselemente 22 erfüllen die gleiche Funktion, wie die Führungselemente in anderen Ausführungsformen, welche durch eine schlitzartige Ausnehmung in der Tragschiene geführt sind, nämlich eine seitliche Auslenkung in der sekundären Erstreckungsrichtung Y der Sperrvorrichtung 1 zu verhindern. Des Weiteren ist an dem Einsatz 24 der Halter 14 zur Aufnahme des Mähfingers angeordnet. Der Halter 14 entspricht in seiner Form der Aufnahmeöffnung 23, so dass der Halter 14 in die Aufnahmeöffnung 23 einsetzbar ist und bei montierter Sperrvorrichtung 1 auf der der Tragschiene 5 gegenüberliegenden Seite der Sperrvorrichtung 1 angeordnet ist.

Das plattenförmige Bauteil des Einsatzes 24 weist auf seiner der Tragschiene 5 zugewandten Seite den ersten Anschlag 6 auf. Dementsprechend bildet die der Sperrvorrichtung 1 zugewandte Seite der Tragschiene den zweiten Anschlag 7. Bei einer Biegebeanspruchung der Tragschiene 5 in der ersten Biegerichtung Z liegt der erste Anschlag an dem zweiten Anschlag an, so dass die Sperrvorrichtung 1 als Versteifung der Tragschiene 5 in dem Mittenabschnitt 11 wirkt. Bei einer Biegebeanspruchung der Tragschiene 5 in der zweiten Biegerichtung -Z wird die Sperrvorrichtung 1 nicht mitgebogen, da der erste Anschlag 6 sich von dem zweiten Anschlag 7 entfernt, wozu wiederum der Halter 14 ein entsprechendes Spiel auf den Mähfinger aufweisen muss. Die Durchbiegung der Tragschiene in der zweiten Biegerichtung -Z wird durch die Sperrvorrichtung 1 nicht wesentlich beeinflusst.

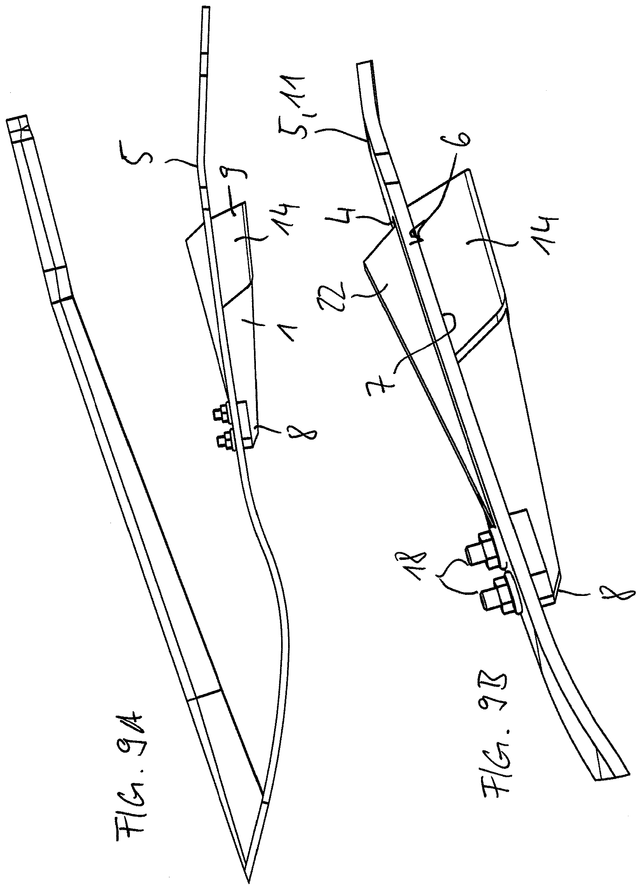

In der Figur 9a ist eine weitere Ausführungsform des erfindungsgemäßen Ährenhebers in einer Seitenansicht dargestellt. Die Figur 9b zeigt den Mittenabschnitt 11 der Tragschiene 5 als Detail in einer vergrößerten perspektivischen Darstellung. Bei der gezeigten Ausführungsform unterscheidet sich die Sperrvorrichtung 1 gegenüber der Ausführungsform gemäß Figur 8a dadurch, dass diese einteilig ausgeführt ist. Des Weiteren weist die Sperrvorrichtung 1 ein Führungselement 22 auf, welches durch eine schlitzartige Ausnehmung 4 geführt ist. Das erste Ende 8 der Sperrvorrichtung 1 ist mit der Tragschiene verbunden. Die Sperrvorrichtung 1 wird im Wesentlichen durch ein plattenförmiges Bauteil gebildet, welches sich im Wesentlichen in einer Ebene erstreckt, die durch die erste Biegerichtung Z und die Haupterstreckungsrichtung X aufgespannt wird. Dieses plattenförmige Bauteil der Sperrvorrichtung ist somit senkrecht zu der Tragschiene 5 ausgerichtet. Das zweite Ende 9 der Sperrvorrichtung 1 wird durch den Halter 14 gebildet, dessen der Tragschiene 5 zugewandte Oberseite den ersten Anschlag bildet. Die dem Halter 14 zugewandte Unterscheite der Tragschiene 5 bildet somit den zweiten Anschlag 7. Bei einer Biegebeanspruchung der Tragschiene 5 in der ersten Biegerichtung Z liegt der erste Anschlag 6 an dem zweiten Anschlag 7 an, so dass die Sperrvorrichtung 1 als Versteifung der Tragschiene 5 in dem Mittenabschnitt 11 wirkt. Bei einer Biegebeanspruchung der Tragschiene 5 in der zweiten Biegerichtung -Z hingegen entfernt sich das nicht mit der Tragschiene 5 verbundene zweite Ende 9 der Sperrvorrichtung 1 von der Tragschiene 5, so dass der erste Anschlag 6 nicht mehr an dem zweiten Anschlag 7 anliegt. Die Sperrvorrichtung 1 hat dadurch keinen wesentlichen Einfluss auf das Biegeverhalten der Tragschiene 5 in der zweiten Biegerichtung -Z.

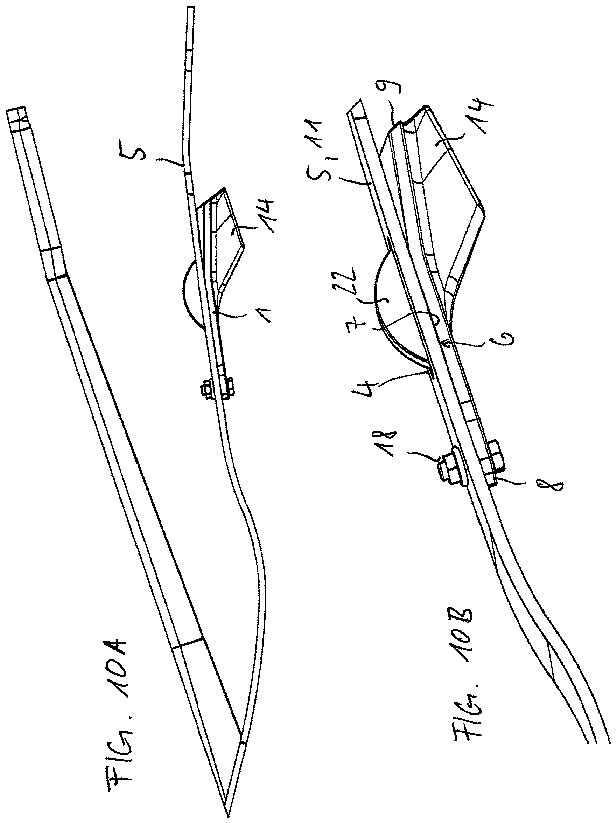

In der Figur 10a ist eine lediglich durch die Formgebung zu unterscheidende Abwandlung der Ausführungsform gemäß Figur 2a in einer Seitenansicht dargestellt. Die Figur 10b zeigt den Mittenabschnitt 11 der Tragschiene 5 als Detail in einer vergrößerten perspektivischen Darstellung. Im Übrigen wird auf die Beschreibung zu den Figuren 2a, 2b und 2c verwiesen, da die dort gezeigt Ausführungsform funktional identisch ist.

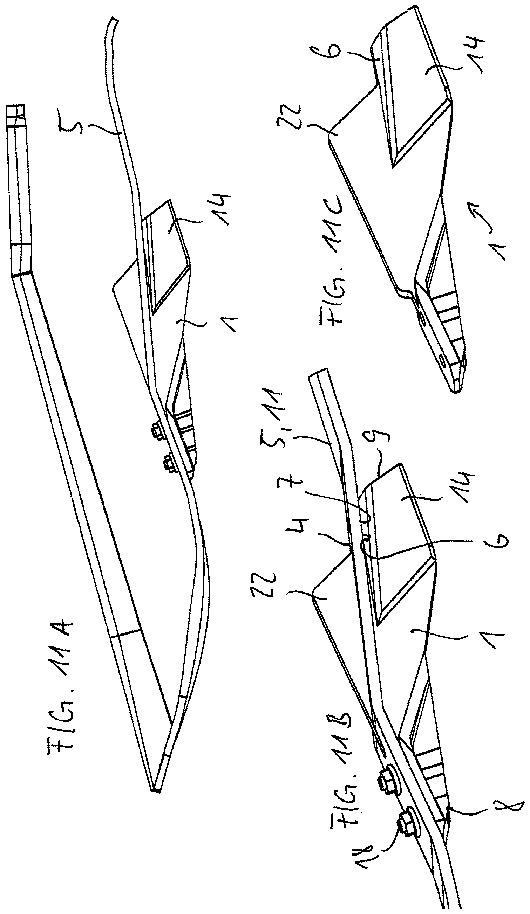

In der Figur 11a ist eine lediglich die Formgebung betreffende Abwandlung der Ausführungsform gemäß Figur 9a in einer Seitenansicht dargestellt. Die Figur 11b zeigt den Mittenabschnitt 11 der Tragschiene 5 als Detail in einer vergrößerten perspektivischen Darstellung. In der Figur 11c ist die Sperrvorrichtung 1 allein als Detail perspektivisch dargestellt. In der Figur 11c ist erkennbar, dass der Halter 14 mit dem Führungselement 22 verbunden bzw. einteilig ausgeführt ist, so dass der der Halter 14 und das Führungselement 22 mit dem für die Befestigung vorgesehenen ersten Ende 8 die Sperrvorrichtung 1 bilden. Bezüglich der funktionalen Zusammenhänge wird auf die Beschreibung der Figuren 9a, 9b und 9c verwiesen.

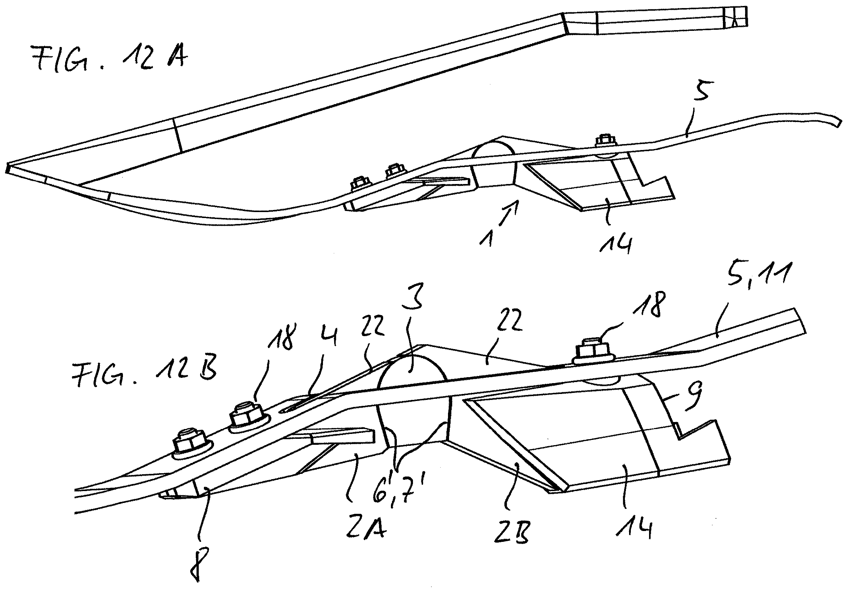

In der Figur 12a ist eine weitere Ausführungsform des erfindungsgemäßen Ährenhebers in einer Seitenansicht dargestellt. Die Figur 12b zeigt den Mittenabschnitt 11 der Tragschiene 5 als Detail in einer vergrößerten perspektivischen Darstellung. In dem dargestellten Ausführungsbeispiel ist die Sperrvorrichtung 1 mehrteilig ausgeführt. Die Sperrvorrichtung 1 umfasst das erste Sperrglied 2A, das zweite Sperrglied 2B und einen Drehpunkt 3. Das erste Sperrglied mit dem ersten Ende 8 der Sperrvorrichtung 1 ist durch Befestigungsmittel 18 an der Tragschiene 5 befestigt. Ebenso ist das zweite Sperrglied 2B mit dem zweiten Ende 9 der Sperrvorrichtung 1 durch ein Befestigungsmittel 18 mit der Tragschiene 5 verbunden. Der Halter 14 für den Mähfinger ist an dem zweiten Sperrglied 2B ausgebildet. Das erste Sperrglied 2A, das zweite Sperrglied 2B und der Drehpunkt 3 bilden ein Drehgelenk. Dazu weisen das erste Sperrglied 2A und das zweite Sperrglied 2B plattenförmige Bauteile auf, welche einen Ausschnitt aufweisen, in dem der Drehpunkt 3 aufgenommen ist. Der Drehpunkt 3 ist ebenso plattenförmig, wobei die Haupterstreckungsrichtungen der plattenförmigen Bauteile des ersten Sperrglieds 2A und des zweiten Sperrglieds 2B, sowie des Drehpunkts 3 sich in einer durch die Haupterstreckungsrichtung X und die erste Biegerichtung Z aufgespannten Ebene angeordnet sind. Die beschriebenen Bauteile der Sperrvorrichtung 1 sind somit senkrecht zu der Tragschiene 5 ausgerichtet und erstrecken sich durch die Ausnehmung 4 der Tragschiene 5. Die plattenförmigen Bauteile des ersten Sperrglieds 2A und des zweiten Sperrglieds 2B bilden somit auch die Führungselemente 22. Der Drehpunkt 3 weist in dem dargestellten Ausführungsbeispiel keine kreisrunde Form auf. Vielmehr sind in dem Bereich unterhalb der Tragschiene 5 etwa geradlinig verlaufende Randbereiche des Drehpunkts 3 vorgesehen, welche die zweiten Teilanschläge 7' an dem Drehpunkt 3 bilden. Das erste Sperrglied 2A und das zweite Sperrglied 2B sind entsprechend geformt und bilden in dem dem Drehpunkt 3 zugewandten Randbereich entsprechend die ersten Teilanschläge 6'. Der Durch die Ausnehmung 4 hindurchragende Anteil des Drehpunkts 3 ist hingegen halbkreisförmig ausgebildet. Bei einer Biegebeanspruchung der Tragschiene 5 in der ersten Biegerichtung Z ist eine Winkelverstellung des ersten Sperrglieds 2A relativ zu dem zweiten Sperrglied 2B über den Drehpunkt 3 unmöglich, da die etwa geradlinig verlaufenden ersten Teilanschläge 6' und zweiten Teilanschläge 7' das Drehgelenk blockieren. Die an dem ersten Ende 8 und an dem zweiten Ende 9 befestigte Sperrvorrichtung 1 wirkt somit versteifend gegenüber der Biegebeanspruchung der Tragschiene 5 in der ersten Biegerichtung Z.

Bei einer Biegebeanspruchung in der zweiten Biegerichtung -Z hingegen, kann das aus dem ersten Sperrglied 2A, dem zweiten Sperrglied 2B und dem Drehpunkt 3 gebildete Gelenk sich bewegen. Das erste Sperrglied 2A wird relativ zu dem zweiten Sperrglied 2B um den Drehpunkt 3 winkelverstellt. Dabei entfernen sich die ersten Teilanschläge 6' von den zweiten Teilanschlägen 7', weshalb die geradlinig verlaufenden Randbereiche des Drehpunkts nicht parallel zueinander verlaufen, um zu verhindern, dass der Drehpunkt 3 bei einer Auslenkung der Tragschiene 5 in der zweiten Biegerichtung -Z herausfallen kann. Das bewegliche Drehgelenk der Sperrvorrichtung 1 hat keinen wesentlichen Einfluss auf das Biegeverhalten der Tragschiene 5 bei einer Biegebeanspruchung in der zweiten Biegerichtung -Z.

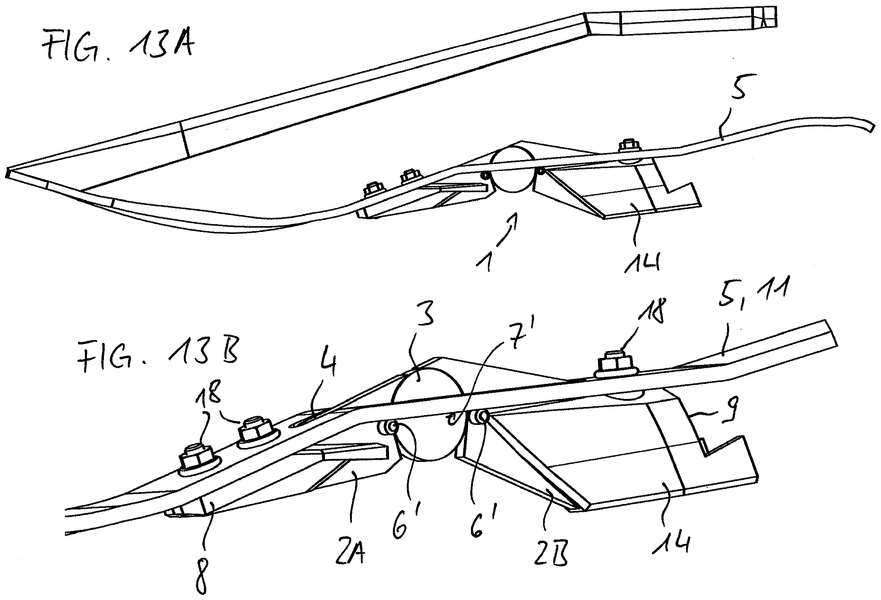

In der Figur 13a ist ein weiteres Ausführungsbeispiel des erfindungsgemäßen Ährenhebers in einer Seitenansicht dargestellt. In der Figur 13b ist der Mittenabschnitt 11 der Tragschiene 5 als Detail in einer vergrößerten perspektivischen Darstellung gezeigt. Der Drehpunkt 3 weist in der Ausführungsform eine kreisrunde Form auf. Die plattenförmigen Bauteile des ersten Sperrglieds 2A und des zweiten Sperrglieds 2B weisen jeweils entsprechende Ausformungen in Form von Kreissegmenten auf, um den Drehpunkt 3 aufzunehmen. An den plattenförmigen Bauteilen des ersten Sperrglieds 2A und des zweiten Sperrglieds 2B sind zwei die ersten Teilanschläge 6' bildenden Zapfen angeordnet, welche unmittelbar an der Tragschiene 5 anliegen. Die den ersten Teilanschlägen 6' zugewandte Unterseite der Tragschiene 5 bildet somit die zweiten Teilanschläge 7'. Unter einer Biegebeanspruchung der Tragschiene 5 in der ersten Biegerichtung Z kann das durch das erste Sperrglied 2A, das zweite Sperrglied 2B und dem Drehpunkt 3 gebildete Drehgelenk nicht gedreht werden, da dazu die plattenförmigen Bauteile des ersten Sperrglieds 2A und des zweiten Sperrglieds 2B, sowie der Drehpunkt 3 sich weiter nach oben durch die Ausnehmung 4 hindurch bewegen müssten. Dies wird durch die ersten Teilanschläge 6' in Form von Zapfen, welche gegen die die zweiten Teilanschläge 7' bildende Tragschiene 5 gedrückt werden, verhindert. Diese Blockierung des Drehgelenks bewirkt, dass die Sperrvorrichtung 1 gegenüber der Biegebeanspruchung der Tragschiene 5 in der ersten Biegerichtung Z aussteifend wirkt. Bei einer Biegebeanspruchung der Tragschiene 5 in der zweiten Biegerichtung -Z hingegen kann sich das durch das erste Sperrglied 2A, das zweite Sperrglied 2B und den Drehpunkt 3 gebildete Drehgelenk drehen, wobei die plattenförmigen Bauteile des ersten Sperrglieds 2A und des zweiten Sperrglieds 2B, sowie der Drehpunkt 3 dabei geringfügig nach unten aus der Ausnehmung 4 der Tragschiene 5 heraus bewegt werden, so dass die ersten Teilanschläge 6' von den zweiten Teilanschlägen 7' hinfort bewegt werden. Das erste Sperrglied 2A lässt sich somit relativ zu dem zweiten Sperrglied 2B um den Drehpunkt 2 winkelverstellen. Auf das Biegeverhalten der Tragschiene 5 hat die Sperrvorrichtung 1 bei einer Biegebeanspruchung in der zweiten Biegerichtung -Z somit keinen Einfluss.

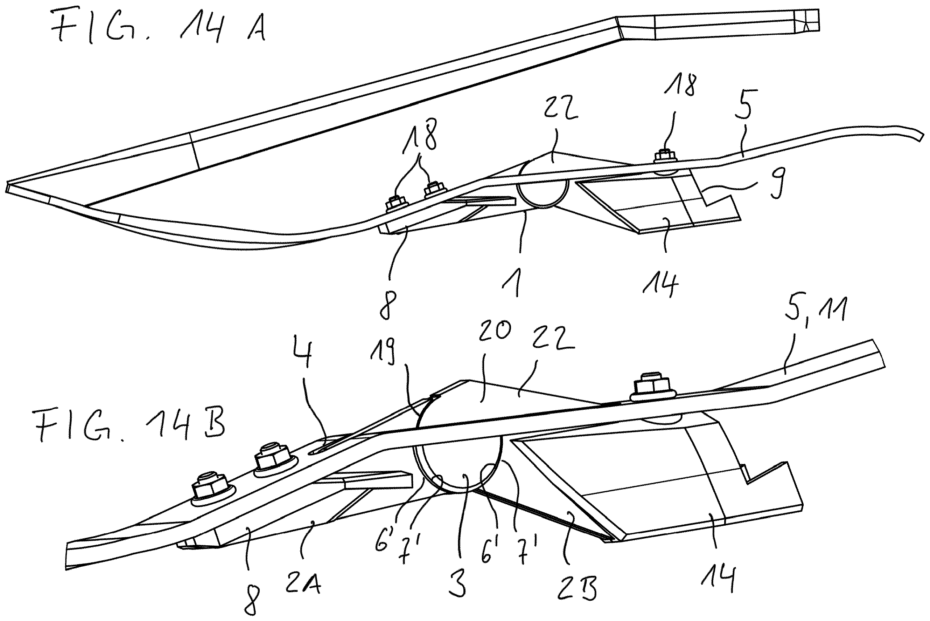

Die Figur 14a zeigt eine weitere Ausführungsform des erfindungsgemäßen Ährenhebers in einer Seitenansicht. In der Figur 14b ist der Mittenabschnitt 11 der Tragschiene 5 in einer perspektivischen Ansicht dargestellt. Die Sperrvorrichtung 1 ist an ihrem vorderen Ende 8 mittels zweier Befestigungselemente 18 mit der Tragschiene 5 verbunden. In dem dargestellten Ausführungsbeispiel ist die Sperrvorrichtung 1 zweiteilig ausgeführt und umfasst ein erstes Sperrglied 2A und ein zweites Sperrglied 2B. Das befestigte vordere Ende 8 ist an dem ersten Sperrglied 2A angeordnet. In dem Ausführungsbeispiel ist auch das zweite Ende 9 der Sperrvorrichtung mit der Tragschiene 5 durch ein Befestigungsmittel 18 verbunden. Das zweite Ende 9 befindet sich an dem zweiten Sperrglied 2B und ist durch den Halter 14 zur Aufnahme eines Mähfingers gebildet. Die Tragschiene 5 weist eine schlitzförmige Ausnehmung 4 auf, in der ein Führungselement 22 der Sperrvorrichtung geführt ist. Das erste Sperrglied 2A ist mit dem zweiten Sperrglied 2B über einen Drehpunkt 3 verbunden, welcher sich ebenfalls durch die Ausnehmung 4 hindurch erstreckt. Bei dem Drehpunkt 3 handelt es sich insbesondere um eine kreisrunde Scheibe, welche durch einen Schlitz 19 von dem ersten Sperrglied 2A und von dem zweiten Sperrglied 2B getrennt ist. So wirkt der Drehpunkt 3 in der Art eines Scharniers. Mit dem ersten Sperrglied 2A ist der Drehpunkt 3 nicht verbunden. Mit dem zweiten Sperrglied 2B ist der Drehpunkt 3 über eine Verbindung 20 verbunden, da der Schlitz 19 nicht bis in den Bereich der Verbindung 20 geführt ist. Bei der dargestellten Ausführungsform sind wiederum mehrere erste und zweite Anschläge vorhanden, die miteinander wirken, um die Versteifung der Tragschiene 5 durch die Sperrvorrichtung 1 unter Biegebeanspruchung in der ersten Biegerichtung Z zu ermöglichen, nicht aber in der entgegengesetzten zweiten Biegerichtung -Z. Die mehreren räumlich getrennten Anschlägen sind, wie zuvor als erste Teilanschläge 6' und zweite Teilanschläge 7' bezeichnet. Die ersten Teilanschläge 6' sind im Bereich des Schlitzes 19 angeordnet, und zwar an dem ersten Sperrglied 2A und an dem Drehpunkt 3. Die ersten Teilanschläge 6' liegen jeweils an zweiten Teilanschlägen 7' an, die somit ebenfalls im Bereich des Schlitzes 19 angeordnet sind, nämlich dementsprechend an dem Drehpunkt 3 und an dem zweiten Sperrglied 2B. Unter Biegebeanspruchung der Führungsschiene 5 in der ersten Biegerichtung Z werden die ersten Teilanschläge 6' gegen die zweiten Teilanschläge 7' gedrückt und die Sperrvorrichtung 1 wirkt versteifend. Bei einer Biegebeanspruchung der Tragschiene 5 in der zweiten Biegerichtung -Z hingegen entfernen sich die ersten Teilanschläge 6' von den zweiten Teilanschlägen 7' und das zweite Sperrglied 2B verdreht sich um den Drehpunkt 3 und ändert somit seine Winkelstellung relativ zu dem ersten Sperrglied 2A, während die Tragschiene 5 in der zweiten Biegerichtung -Z ausgelenkt wird. Die Sperrvorrichtung 1 hat dabei keine bzw. eine wesentlich geringere versteifende Wirkung.

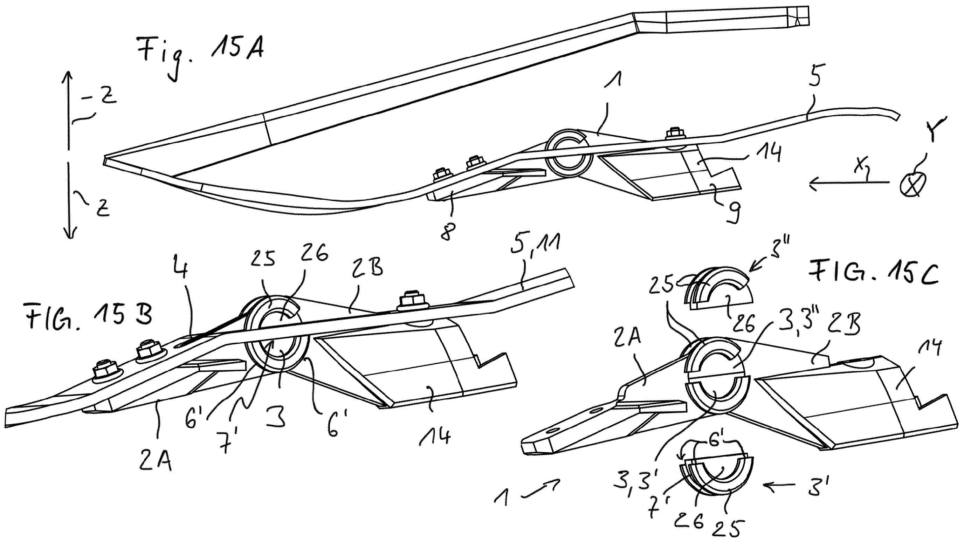

In der Figur 15a ist eine weitere Ausführungsform des erfindungsgemäßen Ährenhebers in einer Seitenansicht dargestellt. Die Figur 15b zeigt den Mittenabschnitt 11 der Tragschiene 5 als Detail in einer vergrößerten perspektivischen Darstellung. In der Figur 15c ist die Sperrvorrichtung 1 alleine und in Einzelteilen perspektivisch dargestellt. Die Figuren 15a, 15b und 15c werden gemeinsam beschrieben. Wie am deutlichsten in der Figur 15c zu erkennen, ist die Sperrvorrichtung 1 aus vier einzelnen, nicht verbundenen Einzelteilen aufgebaut, nämlich aus dem ersten Sperrglied 2A, dem zweiteiligen Drehpunkt 3 und dem zweiten Sperrglied 2B. Das erste Sperrglied 2A umfasst das erste vordere Ende 8 der Sperrvorrichtung 1, welches mit Befestigungsmitteln 18 mit dem Mittenabschnitt 11 der Tragschiene 5 verbunden ist. Das zweite Sperrglied 2B mit dem zweiten hinteren Ende 9 der Sperrvorrichtung 1 ist ebenfalls über ein Befestigungsmittel 18 mit dem Mittenbereich 11 der Tragschiene 5 verbunden. Des Weiteren ist der Halter 14 an dem zweiten Sperrglied 2B angeordnet. Der zweiteilige Drehpunkt 3 ist in der Figur 15c doppelt dargestellt, zum einen gemeinsam mit den Sperrgliedern 2A und 2B als Sperrvorrichtung 1, sowie einmal in seine zwei Teile zerlegt, die als erstes Drehpunktteil 3' und als zweites Drehpunktteil 3" bezeichnet sind. Beide Drehpunktteile 3', 3" bilden gemeinsam den im Wesentlichen kreisrunden Drehpunkt 3. Beide Drehpunktteile 3', 3" weisen eine Randwulst 25 auf, welche jeweils sich entlang eines Teilumfangs des Randes erstreckt. In dem Bereich der Randwulst 25 weist der Drehpunkt 3 eine größere Dicke auf, als in seinem scheibenförmigen Zentralbereich 26 innerhalb der Randwulst 25. Darüber hinaus steht die Randwulst 25 radial über den scheibenförmigen Zentralbereich 26 über. Die Sperrvorrichtung 1 bildet ein Drehgelenk, wobei der scheibenförmigen Zentralbereich 26 des Drehpunkts 3 in die entsprechenden halbkreisförmigen Ausformungen des ersten Sperrglieds 2A und des zweiten Sperrglieds 2B eingepasst ist. Die überstehende Randwulst 25 verdeckt so im montierten Zustand den zwischen den Sperrgliedern 2A, 2B und dem Zentralbereich 26 des Drehpunkts 3 gebildeten Spalt, wodurch vorteilhaft ein Eindringen von Schmutz oder abgeschnittenen Halmen in den Spalt verhindert wird. Weiterhin vorteilhaft bildet die Randwulst 25 eine seitliche Führung des Drehpunkts 3 entlang der Sperrglieder 2A, 2B, mit denen die Randwulst 25 den Drehpunkt 3 formschlüssig in der sekundären Erstreckungsrichtung Y verbindet.

Das erste Sperrglied 2A ist über den Drehpunkt 3 relativ zu dem zweiten Sperrglied 2B winkelverstellbar. Die das Gelenk ausbildenden, plattenförmigen Teile des ersten Sperrglieds 2A und des zweiten Sperrglieds 2B, sowie der Zentralbereich 26 des Drehpunkts 3 haben ihre Haupterstreckungsrichtungen in einer Ebene, welche durch die erste Biegerichtung Z und die Haupterstreckungsrichtung X aufgespannt ist. Die sich dazu senkrecht erstreckende Tragschiene 5 weist die schlitzartige Ausnehmung 4 auf, durch welche das erste Sperrglied 2A, das zweite Sperrglied 2B und der Zentralbereich 26 des Drehpunkts 3 sich jeweils zum Teil hindurch erstrecken. Die Randwulst 25 erstreckt sich hingegen derart in der sekundären Erstreckungsrichtung Y, dass sie die Ausnehmung 4 überragt und an der Tragschiene 5 anliegt. Zur Montage des Drehpunkts 3 ist dieser bei der gezeigten Ausführungsform zweiteilig ausgeführt.

Der erste Anschlag 6 der Sperrvorrichtung 1 ist in dem Ausführungsbeispiel in sechs erste Teilanschläge 6' aufgeteilt. Der zweite Anschlag 7 ist ebenfalls in mehrere zweite Teilanschläge 7' aufgeteilt, wobei die jeweils ersten Teilanschläge 6' mit den zweiten Teilanschlägen 7' zusammenwirken, um die Relativbewegung der Sperrvorrichtung 1 zu dem Mittenabschnitt 11 unter Biegebeanspruchung in der ersten Biegerichtung Z zu blockieren. Der Drehpunkt 3 weist vier der ersten Teilanschläge 6' auf, jeweils ein weiterer erster Teilanschlag 6' befindet sich an dem ersten Sperrglied 2A und dem zweite Sperrglied 2B. Die entsprechenden zweiten Teilanschläge 7' sind an dem Rand des scheibenförmigen Zentralbereichs 26 des Drehpunkts 3 gebildet, der an dem ersten Sperrglied 2A und dem zweite Sperrglied 2B anliegt. Die ersten Teilanschläge 6' an dem Drehpunkt 3 werden durch jeweils zwei Kopfenden der Randwulst 25 an jeder Seite des ersten Drehpunktteils 3' gebildet. Die Randwulst 25 erstreckt sich entlang eines Teilumfangs des Randes des ersten Drehpunktteils 3' und endet jeweils mit einem Kopfende vor dem Durchmesser des scheibenförmigen Zentralbereichs 26, wobei die insgesamt vier Kopfenden als erste Teilanschläge 6' an der Unterseite der Tragschiene 5 anliegen, an der die zugehörigen zweiten Teilanschläge 7' gebildet sind. Unter einer Biegebeanspruchung der Tragschiene 5 in der ersten Biegerichtung Z kann das erste Sperrglied 2A relativ zu dem zweiten Sperrglied 2B nicht um den Drehpunkt 3 gedreht werden, da sowohl das erste Sperrglied 2A als auch das zweite Sperrglied 2B mit der Tragschiene 5 verbunden sind. Um eine solche Winkelverstellung zu ermöglichen, müsste sich der Drehpunkt 3 mit den plattenförmigen Bauteilen des ersten Sperrglieds 2A und des zweiten Sperrglieds 2B weiter durch die schlitzförmige Ausnehmung 4 hindurch bewegen. Dies wird jedoch durch die ersten Teilanschläge 6' an dem Drehpunkt 3 verhindert, da die die ersten Teilanschläge 6' bildenden Kopfenden der Randwulst 25 an dem ersten Drehpunktteil 3' an der Tragschiene 5 anliegen und somit eine Bewegung des Drehpunkts 3 weiter durch die Ausnehmung 4 hindurch verhindern. Aus diesem Grund wirkt die Sperrvorrichtung 1 gegenüber einem Biegemoment in der ersten Biegerichtung Z versteifend. Die Randwulst 25 an dem zweiten Drehpunktteil 3" erstreckt sich über einen geringeren Teilumfang des Randes, als bei dem ersten Drehpunktteil 3'. Bei einer Biegebeanspruchung der Tragschiene 5 in der zweiten Biegerichtung -Z kann dadurch das erste Sperrglied 2A relativ zu dem zweiten Sperrglied 2B um den Drehpunkt 3 herum verstellt werden, da der Drehpunkt 3 sich in Richtung der ersten Biegerichtung Z nach unten aus der Ausnehmung 4 heraus bewegt. Dabei entfernen sich die ersten Teilanschläge 6'von den zweiten Teilanschlägen 7', so dass die Sperrvorrichtung 1 das Durchbiegen der Tragschiene 5 in der zweiten Biegerichtung -Z nicht wesentlich beeinflusst. Die hier nicht gezeigten Oberflächen der halbkreisförmigen Ausnehmungen an dem ersten Sperrglied 2A und an dem zweiten Sperrglied 2B, die erste Teilanschläge 6' bilden, sind vergleichbar mit denen der in Figur 6c gezeigten Ausführungsform.

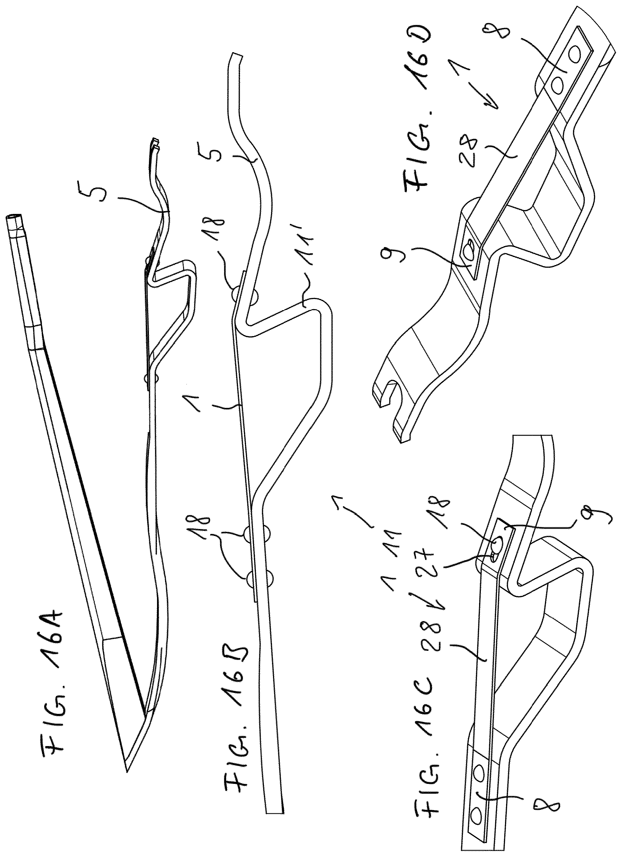

In der Figur 16a ist eine weitere Ausführungsform des erfindungsgemäßen Ährenhebers in einer perspektivischen Ansicht dargestellt. Die Figur 16b zeigt den Mittenabschnitt 11 der Tragschiene 5 als Detail in einer vergrößerten Seitenansicht. In den Figuren 16c und 16d ist der Mittenabschnitt 11 der Tragschiene 5 als Detail in zwei verschiedenen perspektivischen Ansichten gezeigt. Die Figuren 16a, 16b, 16c und 16d werden gemeinsam beschrieben. Die Sperrvorrichtung 1 weist in der Ausführungsform ein Zugelement 28 auf. Die Sperrvorrichtung 1 ist mit dem ersten Ende 8 mittels Nieten als Befestigungsmittel 18 an dem Mittenabschnitt 11 der Tragschiene 5 befestigt. Das zweite Ende 9 der Sperrvorrichtung 1 ist mit einem Niet als Befestigungsmittel 18 an der Tragschiene 5 befestigt. Der Mittenbereich 11 weist eine Ausformung 11' auf, welche im weitesten Sinne als u-förmig zu bezeichnen ist, wobei das Zugelement 28 die Ausformung 11' überspannt. Das Zugelement 28 kann als Seil ausgeführt sein, in dem dargestellten Ausführungsbeispiel handelt es sich um ein Federblech. Das Zugelement 28 wird unter der Biegebeanspruchung in der ersten Biegerichtung Z auf Zug beansprucht und wirkt dadurch bezüglich einer Biegebeanspruchung des Mittenabschnitts 11 versteifend. Die versteifende Wirkung des Zugelements 28 ist bezüglich der Biegebeanspruchung des Mittenabschnitts 11 in der ersten Biegerichtung Z größer als in der zweiten Biegerichtung -Z, da die über das Zugelement 28 übertragbaren Zugkräfte größer sind, als die Druckkräfte, die das Federblech als Zugelement 28 aufnehmen kann. Werden über die befestigten Enden 8, 9 Druckkräfte in das Zugelement 28 eingeleitet, was bei einer Biegebeanspruchung in der zweiten Biegerichtung -Z der Fall ist, wird das Federblech gebogen und wirkt nur geringfügig oder gar nicht versteifend, so dass die Tragschiene 5 flexibel nach oben gebogen werden kann. Zusätzlich kann, wie in den Figuren 16c und 16d erkennbar ist, die Befestigung des zweiten Endes der Sperrvorrichtung 1 durch ein Langloch 27 in dem Zugelement 28 erfolgen. Dadurch kann das Zugelement 28 zunächst praktisch keine Druckkräfte aufnehmen, wenn es zu einer Biegebeanspruchung in der zweiten Biegerichtung -Z kommt, da der Mittenabschnitt 11 mit dem Befestigungsmittel 18 sich entlang des Langlochs 27 der Sperrvorrichtung 1 verschieben kann. Zum Einfedern des Federblechs als Zugmittel 28 kommt es nur dann, wenn das Befestigungsmittel 18 unter Druck an dem entfernten Ende des Langlochs 27 anschlägt.

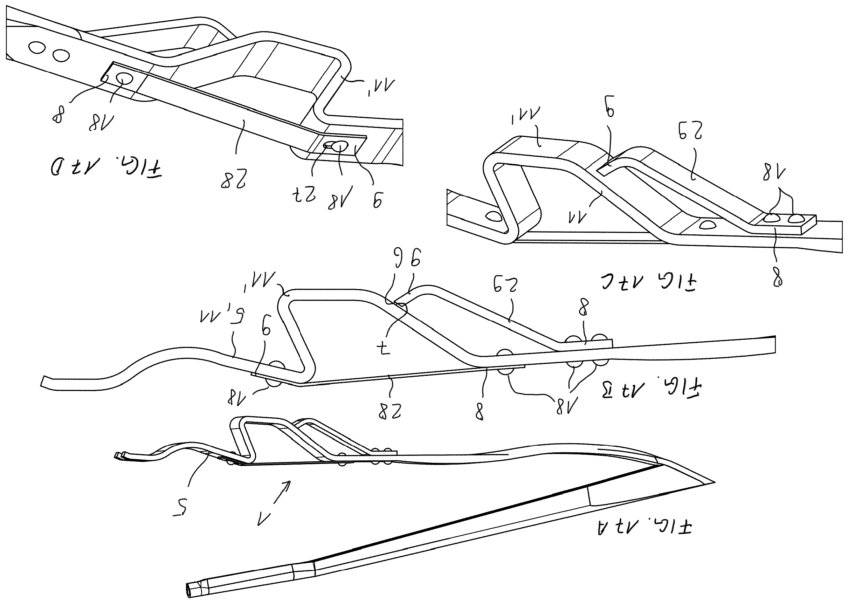

In der Figur 17a ist eine weitere Ausführungsform des erfindungsgemäßen Ährenhebers in einer perspektivischen Ansicht dargestellt. Die Figur 17b zeigt den Mittenabschnitt 11 der Tragschiene 5 als Detail in einer vergrößerten Seitenansicht. In den Figuren 17c und 17d ist der Mittenabschnitt 11 der Tragschiene 5 als Detail in zwei verschiedenen perspektivischen Ansichten gezeigt. Die Figuren 17a, 17b, 17c und 17d werden gemeinsam beschrieben. Die Sperrvorrichtung 1 weist in der Ausführungsform ein Druckelement 29 auf. Das Druckelement 29 der Sperrvorrichtung 1 ist mit dem ersten Ende 8 mittels Nieten als Befestigungsmittel 18 an dem Mittenabschnitt 11 der Tragschiene 5 befestigt. Das zweite Ende 9 des Druckelements 29 der Sperrvorrichtung 1 ist nicht mit der Tragschiene 5 verbunden. Der Mittenbereich 11 weist eine Ausformung 11' auf, welche im weitesten Sinne als u-förmig zu bezeichnen ist, wobei das Druckelement 28 sich mit dem zweiten Ende 9 an der Ausformung 11' abstützt, sodass an dem zweiten Ende 9 der erste Anschlag 6 gebildet ist und an der Ausformung 11' des Mittenabschnitts 11 der zweite Anschlag 7. Unter der Biegebeanspruchung in der ersten Biegerichtung Z wird der der erste Anschlag 6 gegen den zweiten Anschlag 7 gedrückt und das Druckelement 29 auf Druck beansprucht, so dass es dadurch bezüglich der Biegebeanspruchung des Mittenabschnitts 11 in der ersten Biegerichtung Z versteifend wirkt. Die versteifende Wirkung des Druckelements 29 ist bezüglich der Biegebeanspruchung des Mittenabschnitts 11 in der ersten Biegerichtung Z größer, da das Druckelement 29 nur Druckkräfte aufnehmen kann, da das zweite Ende 9 nicht an der Tragschiene 5 befestigt ist. Bei Biegebeanspruchung des Mittenabschnitts 11 in der zweiten Biegerichtung -Z ist es daher frei beweglich. Zusätzlich kann die Sperrvorrichtung 1 ein Zugelement 28 aufweisen, welches in der Figur 17D am besten erkennbar ist. Das Sperrelement 1 ist in dem Fall zweiteilig ausgeführt, wobei das Zugelement 28 und das Druckelement 29 in dem Fall jeweils für sich ein erstes Ende 8 und ein zweites Ende 9 aufweisen. Im Übrigen wird bezüglich der Einzelheiten der Funktion des Zugelements 28 auf die Beschreibung zu dem Ausführungsbeispiel gemäß Figuren 16a, 16b, 16c und 16d verwiesen.

### Bezugszeichenliste

- 1: Sperrvorrichtung
- 2: Sperrglieder
- 2A: Erstes Sperrglied
- 2B: Zweites Sperrglied
- 3: Drehpunkt
- 3': Erstes Drehpunktteil
- 3": Zweites Drehpunktteil
- 4: Ausnehmung
- 5: Tragschiene
- 6: Erster Anschlag
- 6': Erste Teilanschläge
- 7: Zweiter Anschlag
- 7': Zweite Teilanschläge
- 8: Erstes Ende der Sperrvorrichtung
- 9: Zweites Ende der Sperrvorrichtung
- 10: Befestigungsabschnitt
- 11: Mittenabschnitt
- 11': Ausgeformter Teil des Mittenabschnitts
- 12: Gleitkufenabschnitt
- 14: Halter
- 15: Mähfinger
- 16: Halmheber
- 17: vorderes Ende, Spitze
- 18: Befestigungsmittel
- 19: Schlitz
- 20: Verbindung
- 21: Bohrung
- 22: Führungselement
- 23: Aufnahmeöffnung
- 24: Einsatz
- 25: Randwulst
- 26: Scheibenförmiger Zentralbereich
- 27: Langloch
- 28: Zugelement
- 29: Druckelement
- X: Haupterstreckungsrichtung
- Y: Sekundäre Erstreckungsrichtung
- Z: Erste Biegerichtung
- -Z: Zweite Biegerichtung

## Patentansprüche

1. Ährenheber für Erntegut mit einer Tragschiene (5), wobei die Tragschiene sich in einer Haupterstreckungsrichtung (X) erstreckt und in der Haupterstreckungsrichtung hintereinander angeordnet einen Befestigungsabschnitt (10), einen Mittenabschnitt (11) und einen Gleitkufenabschnitt (12) aufweist,
wobei die Tragschiene eine sich entlang des Mittenabschnitts (11) erstreckende Sperrvorrichtung (1) aufweist, wobei die Sperrvorrichtung bezüglich einer Biegebeanspruchung des Mittenabschnitts versteifend wirkt, wobei eine versteifende Wirkung der Sperrvorrichtung in einer ersten Biegerichtung (Z) größer ist, als in einer zweiten, der ersten Biegerichtung entgegengesetzten Biegerichtung (-Z),
**dadurch gekennzeichnet,**
**dass** die Sperrvorrichtung (1) derart mit dem Mittenabschnitt (11) verbunden ist, dass unter der Biegebeanspruchung eine Relativbewegung der Sperrvorrichtung zu dem Mittenabschnitt hervorgerufen wird, wobei die Relativbewegung unter der Biegebeanspruchung in der ersten Biegerichtung (Z) stärker eingeschränkt ist, als unter der Biegebeanspruchung in der zweiten Biegerichtung (-Z).

2. Ährenheber für Erntegut nach Anspruch 1, **dadurch gekennzeichnet, dass** die Sperrvorrichtung (1) ein erstes Ende (8) und ein zweites Ende (9) aufweist.

3. Ährenheber für Erntegut nach Anspruch 2, **dadurch gekennzeichnet, dass** das erste Ende (8) mit dem Mittenabschnitt (11) der Tragschiene (5) verbunden ist.

4. Ährenheber für Erntegut nach einem der vorhergehenden Ansprüche, **dadurch gekennzeichnet, dass** die Sperrvorrichtung (1) mindestens einen ersten Anschlag (6) aufweist, wobei der erste Anschlag mit einem zweiten Anschlag (7) zusammenwirkt, um die Relativbewegung unter der Biegebeanspruchung in der ersten Biegerichtung (Z) zu blockieren.

5. Ährenheber für Erntegut nach Anspruch 4, **dadurch gekennzeichnet, dass** der zweite Anschlag (7) an der Tragschiene (5) ausgebildet ist.

6. Ährenheber für Erntegut nach einem der vorhergehenden Ansprüche, **dadurch gekennzeichnet, dass** die Sperrvorrichtung (1) mehrteilig mit mindestens zwei Sperrgliedern (2, 2A, 2B) ausgebildet ist.

7. Ährenheber für Erntegut nach Anspruch 6, **dadurch gekennzeichnet, dass** jedes Sperrglied (2, 2A, 2B) in dem Mittenabschnitt (11) mit der Tragschiene (5) verbunden ist.

8. Ährenheber für Erntegut nach einem der Ansprüche 4 bis 7, **dadurch gekennzeichnet, dass** der zweite Anschlag (7) an der Sperrvorrichtung (1) ausgebildet ist.

9. Ährenheber für Erntegut nach einem der Ansprüche 4 bis 8, **dadurch gekennzeichnet, dass** der erste Anschlag (6) in mindestens zwei erste Teilanschläge (6') aufgeteilt ist und der zweite Anschlag (7) in mindestens zwei zweite Teilanschläge (7') aufgeteilt ist, wobei die jeweils ersten Teilanschläge mit den jeweils zweiten Teilanschlägen zusammenwirken, um die Relativbewegung unter der Biegebeanspruchung in der ersten Biegerichtung zu blockieren.

10. Ährenheber für Erntegut nach einem der Ansprüche 6 bis 9, **dadurch gekennzeichnet, dass** die Sperrglieder (2, 2A, 2B) relativ zueinander winkelverstellbar um eine Achse senkrecht zu der Haupterstreckungsrichtung (X) angeordnet sind, wobei eine Winkelverstellung in der ersten Biegerichtung (Z) durch die Sperrglieder blockiert ist und in der zweiten Biegerichtung frei ist.

11. Ährenheber für Erntegut nach einem der Ansprüche 6 bis 10, **dadurch gekennzeichnet, dass** die Sperrvorrichtung ein erstes Sperrglied (2A) und ein zweites Sperrglied (2B) aufweist, wobei das erste Sperrglied mit dem zweiten Sperrglied über einen Drehpunkt (3) verbunden ist.

12. Ahrenheber für Erntegut nach den Ansprüchen 4 und 11, **dadurch gekennzeichnet, dass** der erste Anschlag (6) an dem Drehpunkt (3) angeordnet ist, wobei der zweite Anschlag (7) an der Tragschiene (5) angeordnet ist.

13. Ährenheber für Erntegut nach den vorhergehenden Ansprüchen 9, 11 und 12, **dadurch gekennzeichnet, dass** einer der ersten Teilanschläge (6') an dem erstes Sperrglied (2A) und ein weiterer der ersten Teilanschläge (6') an dem zweites Sperrglied (2B) angeordnet ist, wobei die zweiten Teilanschläge (7') an der Tragschiene (5) oder an dem Drehpunkt (3) angeordnet sind.

14. Ährenheber für Erntegut nach den Ansprüchen 1 und 4 **dadurch gekennzeichnet, dass** die Tragschiene (5) in dem Mittenabschnitt (11) eine Ausnehmung (4) aufweist, wobei die Sperrvorrichtung (1) sich zumindest abschnittsweise durch die Ausnehmung erstreckt, wobei der zweite Anschlag (7) insbesondere an der Ausnehmung (4) gebildet ist.

15. Ährenheber für Erntegut nach einem der vorhergehenden Ansprüche, **dadurch gekennzeichnet, dass** ein Halter (14) vorgesehen ist, wobei der Halter an der Tragschiene (5) angeordnet ist und zur Abstützung an einem Mähfinger (15) dient, wobei der Halter an der Sperrvorrichtung (1) ausgebildet ist.

## Claims

1. Ear lifter for crops with a support bar (5), wherein the support bar extends in a main direction of extension (X) and has, arranged one after the other in the main direction of extension, a fastening portion (10), a middle portion (11) and a skid portion (12), wherein the support bar has a restraining device (1) extending along the central portion (11),
wherein the restraining device reinforces the central portion with respect to a bending stress, wherein a stiffening effect of the restraining device is greater in a first bending direction (Z) than in a second bending direction (-Z) opposite to the first bending direction,
**characterised in**
**that** the restraining device (1) is connected to the central section (11) in such a way that the bending stress causes a relative movement of the restraining device to the central section, wherein the relative movement is more restricted under the bending stress in the first bending direction (Z) than under the bending stress in the second bending direction (-Z).

2. Ear lifter for crops according to claim 1, **characterised in that** the restraining device (1) has a first end (8) and a second end (9).

3. Ear lifter for crops according to claim 2, **characterised in that** the first end (8) is connected to the middle portion (11) of the support bar (5).

4. Ear lifter for crops according to any one of the preceding claims, **characterised in that** said restraining device (5) comprises at least a first stop (6), wherein the first stop engages with a second stop (7) to block the relative movement under the bending stress in the first bending direction (Z).

5. Ear lifter for crops according to claim 4, **characterised in that** the second stop (7) is formed on the support bar (5).

6. Ear lifter for crops according to any one of the preceding claims, **characterised in that** the restraining device (1) is formed in multiple parts with at least two restraining members (2, 2A, 2B).

7. Ear lifter for crops according to claim 6, **characterised in that** each restraining member (2, 2A, 2B) is connected at the middle portion (11) to the support bar (5).

8. Ear lifter for crops according to any one of claims 4 to 7, **characterised in that** the second stop (7) is formed on the restraining device (1).

9. Ear lifter for crops according to any one of claims 4 to 8, **characterised in that** the first stop (6) is divided into at least two first partial stops (6') and the second stop (7) is divided into at least two second partial stops (7'), wherein the respective first partial stops engage with the respective second partial stops to block the relative movement under the bending stress in the first bending direction.

10. Ear lifter for crops according to any one of claims 6 to 9, **characterised in that** the restraining members (2, 2A, 2B) are arranged angularly displaceable relative to each other about an axis perpendicular to the major direction of extension (X), wherein an angular displacement in the first bending direction (Z) is blocked by the restraining members and is free in the second bending direction.

11. Ear lifter for crops according to any one of claims 6 to 10, **characterised in that** the restraining device comprises a first restraining member (2A) and a second restraining member (2B), wherein the first restraining member is connected to the second restraining member via a pivot point (3).

12. Ear lifter for crops according to claims 4 and 11, **characterised in that** the first stop (6) is arranged at the pivot point (3), wherein the second stop (7) is arranged at the support bar (5).

13. Ear lifter for crops according to the preceding claims 9, 11 and 12, **characterised in that** one of the first partial stops (6') is arranged on the first restraining member (2A) and another of the first partial stops (6') is arranged on the second restraining member (2B), wherein the second partial stops (7') are arranged on the support bar (5) or on the pivot point (3).

14. Ear lifter for crops according to the claims 1 and 4, **characterised in that** the support bar (5) has a recess (4) in the middle portion (11), wherein at least a portion of the restraining device (1) extends through the recess, wherein the second stop (7) is in particular formed at the recess (4).

15. Ear lifter for crops according to one of the preceding claims, **characterised in that** a retainer (14) is provided, wherein the retainer is arranged on the support bar (5) to provide abutment against a mowing finger (15), wherein the retainer is formed on the restraining device (1).

## Revendications

1. Releveur d'épis pour produit à récolter avec un rail de support (5), sachant que le rail de support s'étend dans une direction d'extension principale (X) et comporte dans la direction d'extension principale une section de fixation (10), une section centrale (11) et une section à patins (12) disposées l'une derrière l'autre,
sachant que le rail de support comporte un dispositif de blocage (1) s'étendant le long de la section centrale (11), sachant que le dispositif de blocage agit de façon raidissante eu égard à une charge de flexion de la section centrale, sachant qu'un effet de raidissement du dispositif de blocage dans une première direction de flexion (Z) est plus grand que dans une deuxième direction de flexion (-Z) opposée à la première direction de flexion, **caractérisé en ce que**
le dispositif de blocage (1) est relié à la section centrale (11) de telle manière que sous la charge de flexion, un mouvement relatif du dispositif de blocage est engendré par rapport à la section centrale, sachant que le mouvement relatif sous la charge de flexion est plus fortement limité dans la première direction de flexion (Z) que sous la charge de flexion dans la deuxième direction de flexion (-Z).

2. Releveur d'épis pour produit à récolter selon la revendication 1, **caractérisé en ce que** le dispositif de blocage (1) comporte une première extrémité (8) et une deuxième extrémité (9).

3. Releveur d'épis pour produit à récolter selon la revendication 2, **caractérisé en ce que** la première extrémité (8) est reliée à la section centrale (11) du rail de support (5).

4. Releveur d'épis pour produit à récolter selon l'une quelconque des revendications précédentes, **caractérisé en ce que** le dispositif de blocage (1) comporte au moins une première butée (6), sachant que la première butée coopère avec une deuxième butée (7) pour bloquer le mouvement relatif sous la charge de flexion dans la première direction de flexion (Z).

5. Releveur d'épis pour produit à récolter selon la revendication 4, **caractérisé en ce que** la deuxième butée (7) est constituée sur le rail de support (5).

6. Releveur d'épis pour produit à récolter selon l'une quelconque des revendications précédentes, **caractérisé en ce que** le dispositif de blocage (1) est constitué en plusieurs parties avec au moins deux organes de blocage (2, 2A, 2B).

7. Releveur d'épis pour produit à récolter selon la revendication 6, **caractérisé en ce que** chaque organe de blocage (2, 2A, 2B) est relié dans la section centrale (11) au rail de support (5).

8. Releveur d'épis pour produit à récolter selon l'une quelconque des revendications 4 à 7, **caractérisé en ce que** la deuxième butée (7) est constituée sur le dispositif de blocage (1).

9. Releveur d'épis pour produit à récolter selon l'une quelconque des revendications 4 à 8, **caractérisé en ce que** la première butée (6) est subdivisée en au moins deux premières parties de butée (6') et la deuxième butée (7) est subdivisée en au moins deux deuxièmes parties de butée (7'), sachant que respectivement les premières parties de butée coopèrent avec respectivement les deuxièmes parties de butée pour bloquer le mouvement relatif sous la charge de flexion dans la première direction de flexion.

10. Releveur d'épis pour produit à récolter selon l'une quelconque des revendications 6 à 9, **caractérisé en ce que** les organes de blocage (2, 2A, 2B) sont disposés réglables du point de vue angle l'un par rapport à l'autre autour d'un axe perpendiculairement à la direction d'extension principale (X), sachant qu'un réglage angulaire est bloqué dans la première direction de flexion (Z) par les organes de blocage et est libre dans la deuxième direction de flexion.

11. Releveur d'épis pour produit à récolter selon l'une quelconque des revendications 6 à 10, **caractérisé en ce que** le dispositif de blocage comporte un premier organe de blocage (2A) et un deuxième organe de blocage (2B), sachant que le premier organe de blocage est relié au deuxième organe de blocage par un point de rotation (3) .

12. Releveur d'épis pour produit à récolter selon les revendications 4 et 11, **caractérisé en ce que** la première butée (6) est disposée au point de rotation (3), sachant que la deuxième butée (7) est disposée sur le rail de support (5).

13. Releveur d'épis pour produit à récolter selon les revendications précédentes 9, 11 et 12, **caractérisé en ce qu'une** des premières parties de butée (6') est disposée sur le premier organe de blocage (2A) et une autre des premières parties de butée (6') est disposée sur le deuxième organe de blocage (2B), sachant que les deuxièmes parties de butée (7') sont disposées sur le rail de support (5) ou au point de rotation (3).

14. Releveur d'épis pour produit à récolter selon les revendications 1 et 4, **caractérisé en ce que** le rail de support (5) comporte dans la section centrale (11) un évidement (4), sachant que le dispositif de blocage (1) s'étend au moins par sections à travers l'évidement, sachant que la deuxième butée (7) est formée en particulier sur l'évidement (4).

15. Releveur d'épis pour produit à récolter selon l'une quelconque des revendications précédentes, **caractérisé en ce qu'**un support (14) est prévu, sachant que le support est disposé sur le rail de support (5) et sert d'appui sur un doigt de coupe (15), sachant que le support est constitué sur le dispositif de blocage (1).
